# FASCICULE DE BREVET EUROPEEN

(11) **EP 0 041 001 B1**
(45) Date de publication et mention de la délivrance du brevet: **09.05.1984**
(21) Numéro de dépôt: 81400748.0
(22) Date de dépôt: 11.05.1981
(51) Int. Cl.: H04Q 11/04, H04J 6/00, H04L 11/00

(54) **Perfectionnements aux réseaux de commutation numérique à division du temps bit à bit**
Digitale Bit-für-Bit Zeitmultiplex-Fernmeldekoppelfelder
Bit-by-bit time-division digital switching networks

(30) Priorité: 23.05.1980 FR 8011549
(43) Date de publication de la demande: 02.12.1981
(73) Titulaire: ETAT FRANCAIS repr. par le Secrétaire d'Etat aux Postes et Télécomm. et à la Télédiffusion (CENT. NAT. D'ETUDES DES TELECOMM.), 92131 Issy-les-Moulineaux (FR)
(72) Inventeur: Glowinski, Albert, F-92140 Clamart (FR)

## Description

La présente invention concerne des perfectionnements aux réseaux de commutation numérique à division du temps bit à bit tels que décrits dans le brevet FR-A Nₒ 2430141.

Selon l'invention, le principe de la commutation bit à bit de voies entrantes simples ou de voies entrantes composantes multiplexées dans les voies multiplex entrantes est conservé. Ce principe concerne principalement la correspondance d'un bit à un état prédéterminé d'une voie entrante avec la transmission de l'adresse de la voie sortante sur une voie multiplex intermédiaire entre les parties réception et émission. A la réception, la détection du mot de la voie sortante engendre un bit à l'état prédéterminé, et l'absence de cette détection engendre un bit à l'état inverse. Ces critères sont mis en oeuvre pour chaque trame récurrente de la voie multiplex qui transmet, au moyen de mots d'adresse de voies sortantes, l'état implicite des bits de même rang dans des mots des voies entrantes ayant un nombre déterminé de bits. Les moyens communs aux réseaux de commutation selon la présente invention et selon le brevet FR-A No 2430141 sont énoncés dans le préambule de la revendication 1.

Selon le brevet FR-A ? 2430141, le nombre de mots d'adresse transmis dans une trame récurrente de la voie multiplex intermédiaire est statistiquement au plus égal à la moitié du nombre de voies entrantes. En d'autres termes, si tous les bits d'un même rang des mots (ou groupes de bits) des voies entrantes sont à l'état binaire prédéterminé, la trame est complètement remplie de mots d'adresse, en nombre égal au nombre de voies entrantes; si tous les bits d'un même rang des mots (ou groupes de bits) sont à l'autre état binaire, la trame est vide de mots d'adresse. Par suite, la somme des intervalles temporels qui sont disponibles à la transmission d'informations supplémentaires, telle que des mots de signalisation, dans les fins des trames d'une multitrame de la voie intermédiaire, occupe une durée variable comprise entre 0 et le nombre mots d'adresse pouvant être transmis dans cette multitrame.

Le but de la présente invention est de fournir un réseau de commutation du type défini dans le brevet FR-A ? 2430141 pour lequel le nombre de mots d'adresse d'une multitrame est strictement inférieur à la moitié du nombre de voies entrantes à commuter, ou à un nombre sensiblement plus grand que ce dernier. Il en résulte que, pour un nombre déterminé de voies entrantes à commuter et pour des débits de voies multiplex sortantes sensiblement égaux, l'intervalle disponible à la transmission d'informations supplémentaires dans une multitrame selon l'invention peut être équivalent à un nombre de mots d'adresse strictement supérieur à la moitié du nombre de voies entrantes.

Toujours comparativement au brevet FR-A No 2430141, et dans le cas où les mots d'adresse et de verrouillage de trame sont tassés au début d'une multitrame, c'est-à-dire où les intervalles disponibles à des informations supplémentaires sont contigus à la fin de la multitrame, le nombre de voies commutées peut être plus grand pour un débit numérique de voie multiplex intermédiaire donné, c'est-à-dire pour une technologie donnée, imposant une limite à la vitesse de transmission maximale. Corollairement, pour un nombre de voies commutées donné, le débit numérique de la voie multiplex intermédiaire peut être réduit.

Un réseau de commutation résolvant ce problème, du type de celui défini dans l'entrée en matière, est caractérisé en ce qu'il comprend:
- des moyens reliés aux moyens de mise en phase pour sommer les bits de chaque mot de chaque voie entrante afin de produire un bit dit additionnel qui est audit autre état binaire lorsque ladite somme est respectivement inférieure ou égale, ou strictement inférieure, à la moitié dudit nombre prédéterminé de bits d'un mot qui est respectivement pair ou impair, ou un bit dit additionnel qui est à l'état binaire prédéterminé dans le cas contraire;
- des premiers moyens d'aiguillage commandés par lesdits moyens de sommation pour transmettre directement, ou après inversion de leurs états, les bits dudit mot desdits moyens de mise en phase vers lesdits moyens de mémorisation des bits de même rang en réponse audit bit additionnel à l'autre état binaire, ou audit état binaire prédéterminé;
- des moyens pour transmettre sur la voie numérique multiplex intermédiaire des mots indiquant l'inversion ou non des états des bits de chaque mot de voie entrante;
- des moyens reliés à la voie intermédiaire pour détecter lesdits mots d'indication d'inversion des mots de la voie entrante correspondant à chaque voie sortante afin de restituer lesdits bits additionnels, et
- des seconds moyens d'aiguillage commandés par lesdits moyens de détection des mots d'indication d'inversion pour transmettre directement, ou après inversion de leurs états, les bits de chaque mot délivré par les moyens d'émission vers ladite voie sortante en réponse à l'état binaire du bit additionnel correspondant audit mot.

Afin de fixer les idées, si on suppose que l'état prédéterminé des bits transmis explicitement sur la voie multiplex entrante est 1 et si P est la somme des bits à l'état 1 d'un mot de voie entrante, tel que respectivement un octet ou un mot à 11 bits, alors le nombre de mots d'adresse transmis est respectivement toujours inférieur ou égal à 4, ou inférieur à 5,5, et correspond à des bits à l'état 1 respectivement si P < 4, et si P < 5,5, et à des bits à l'état 0 respectivement si P > 4, et si P > 5,5. Par conséquent, la proportion des bits à transmettre implicitement est devenue strictement - et non plus seulement statistiquement - inférieure à ¼. En fait, ce rapport ¹/₂ peut être augmenté dans une faible proportion, comme on le verra dans la suite, à cause du fait que la voie multiplex intermédiaire doit transmettre une information indiquant s'il y a eu inversion des bits ou non avant transformation en mots d'adresse pour la reconstitution des bits dans les parties émission des voies sortantes.

D'autres caractéristiques et avantages de la présente invention apparaîtront plus clairement à la lecture de la description qui suit de plusieurs exemples de réalisation, et à l'examen des dessins annexés correspondants, dans lesquels:
la fig. 1 est un bloc-diagramme de la partie réception d'un réseau numérique à division du temps montrant en détail le circuit de récupération de rythme et de mise en forme d'une voie entrante multiplex selon une première réalisation pour laquelle des mots d'adresse correspondant aux bits additionnels sont transmis;
la fig. 2 est un bloc-diagramme montrant notamment en détail une partie émission de voie sortante multiplex selon la première réalisation;
la fig. 3 représente la multitrame de la voie intermédiaire multiplex de mots d'adresse selon la première réalisation;
les fig. 4 et 5 sont des blocs-diagrammes d'un circuit de décision d'inversion des bits d'une voie composante entrante, relatif à la partie réception de la fig. 1;
la fig. 6 est un bloc-diagramme du circuit de décision d'inversion des bits relatif à la partie émission d'une voie sortante multiplex de la fig. 2;
la fig. 7 représente la multitrame de la voie intermédiaire multiplex de mots d'adresse selon une seconde réalisation;
la fig. 8 représente la chaîne des circuits de la partie réception selon la seconde réalisation, relative à une voie composante entrante;
la fig. 9 montre les modifications apportées à la partie émission d'une voie sortante multiplex de la fig. 2, selon la seconde réalisation;
la fig. 10 représente la multitrame de la voie intermédiaire multiplex de mots d'adresse selon une troisième réalisation, et
la fig. 11 représente la chaîne des circuits de la partie réception selon la troisième réalisation, relative à une voie composante entrante.

Afin de mieux fixer les idées, on se reportera, dans la suite, à la seconde variante décrite dans le brevet FR-A No 2430141. Celle-ci concerne un réseau de commutation numérique à division du temps bit à bit qui commute des voies composantes numériques IT_{i,h} (h variant de 0 à 31) multiplexées dans des voies multiplex à division du temps entrantes Eᵢ (i variant de 0 à 2^{N-}1 ) vers des voies composantes IT_{j,k} (k variant de 0 à 31) multiplexées dans des voies multiplex à division du temps sortantes Sⱼ (j variant de 0 à 2^{N-}1). Les voies multiplex entrantes et sortantes sont isochrones, mais pas forcément en phase. Chacune d'elles est une voie MIC au débit binaire de 2048 kbits/s et résulte du multiplexage à division du temps de 32 voies composantes à 64 kbits/s. Chaque voie composante occupe un intervalle de temps IT égal à 3,9 µs qui correspond à 1 octet de la trame MIC de durée égale à 125 gs.

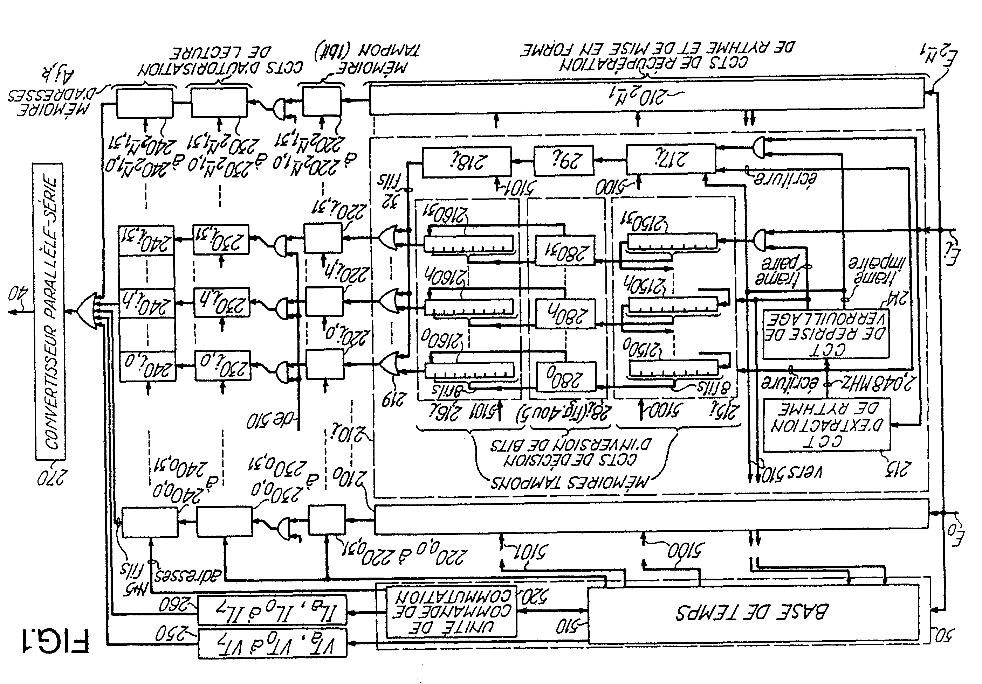

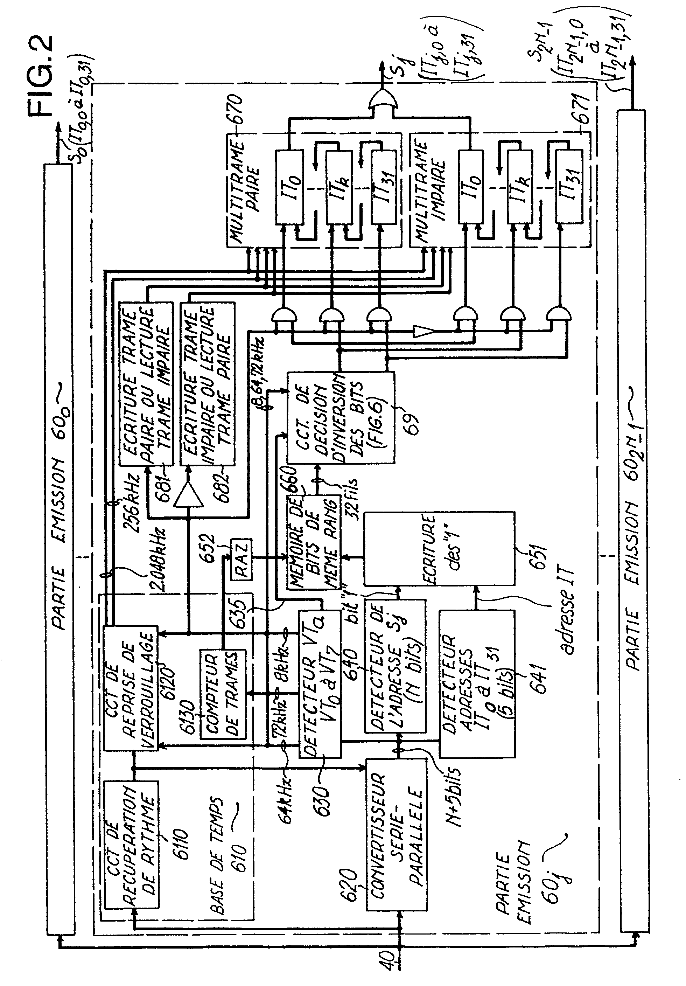

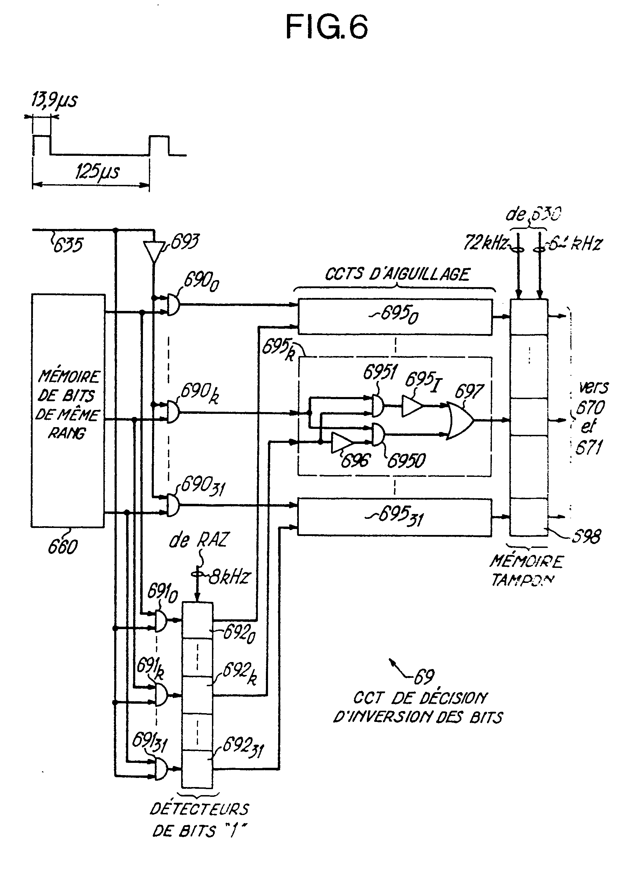

Dans la partie réception commune, montrée à la fig. 1, et dans chaque partie émission 60₀ à 60₂N₋₁ des voies sortantes Sₒ à S₂N₋₁, montrées à la fig. 2, on retrouve les mêmes blocs fonctionnels que ceux décrits pour les fig. 5, 6 et 7 du brevet FR-A No 2430141, désignés par les mêmes repères numériques. La partie réception commune et les parties émissions sont reliées à travers une voie multiplex 40 à débit très élevé.

En se reportant d'abord à la fig. 1, chaque voie multiplex entrante E est reliée à l'entrée d'un circuit de récupération de rythme et de mise en forme 210 qui transmet en parallèle les bits de même rang des 32 octets des voies composantes IT_{i,0} à IT_{i,31} et également 32 bits additionnels vers des cellules à 1 bit 220_{i,0} à 220_{i,31} d'une mémoire tampon 220. La lecture de cette mémoire tampon sous la commande d'une base de temps 510 permet de sélectionner les bits à l'état 1 auxquels correspondent des adresses Aⱼ,ₖ de voies composantes sortantes effectivement transmises vers les parties émissions 60₀ à 60₂N₋₁. Chaque bit à l'état 1 lu dans la mémoire tampon 220 permet d'autoriser, à travers le circuit d'autorisation de lecture correspondant 230₀,₀ à 230₂N-₁, ₃₁, la lecture de l'adresse A_{j,k} contenue dans la cellule correspondante 240_{0,0} à 240₂N₋₁, ₃₁ d'une mémoire vive d'adresses 240. Chaque cellule de la mémoire 240 contient l'une des adresses A_{j,k} des voies composantes sortantes ITⱼ,ₖ désignant la voie composante sortante à connecter à la voie composante entrante correspondante. Les adresses A_{j,k} sont écrites dans la mémoire 240 sous la commande d'une unité de commande de commutation 520 qui modifie le contenu de la mémoire 240 en réponse aux mots de signalisation détectés sur les voies MIC entrantes Eᵢ. La partie réception commune comprend également une mémoire morte 250 contenant les neuf mots de verrouillage VTₐ, VT₀ à VT₇ des trames de la voie multiplex 40, et une mémoire vive de mots de signalisation 260 qui sont émis dans les intervalles de temps libres d'adresse ILₐ, ILₒ à IL₇ des trames. Les mémoires 240, 250 et 260 transmettent ainsi des mots d'adresse, des mots de verrouillage et des mots de signalisation sur la voie multiplex 40, généralement à travers un convertisseur parallèle-série 270. Comme on le voit sur la fig. 1, seuls les circuits de récupération de rythme et de mise en forme sont différents de ceux de la demande de brevet précitée. L'un deux, 210,, est montré et décrit ci-après en détail, les autres étant identiques. Quant aux fonctionnements détaillés des autres blocs et de leurs interconnexions, on se reportera à la partie descriptive de la demande de brevet précitée.

Un circuit 210ᵢ permet la mise en phase de la voie MIC entrante Eᵢ avec la base de temps locale 510 et le réarrangement des voies composantes IT_{i,0} à IT_{i,31}, afin que chacune d'entre elles présente simultanément le bit de même rang, en vue de réaliser la commutation bit à bit. Le circuit 210 comprend un circuit d'extraction de rythme 213, qui produit le signal d'horloge à 2,048 MHz, et un circuit de reprise de verrouillage 214 qui détecte les mots de verrouillage des trames récurrentes MIC entrantes qui sont à la fréquence de 8 kHz, égale à la fréquence d'échantillonnage des voies composantes IT_{i,h}. Le circuit 210 comprend également des paires de mémoires tampons 215ᵢ-216ᵢ et 217ᵢ-218ᵢ dont chacune est propre à traiter les trames d'entrée MIC paires et impaires successives. Chaque première mémoire 215ᵢ, 217ᵢ a ses sorties reliées aux entrées de la seconde mémoire 216ᵢ, 218ᵢ à travers un circuit de décision d'inversion de bits 28ᵢ, 29ᵢ. Cette séparation entre trames a pour but de permettre le réarrangement des bits d'une trame paire à une cadence multiple de celle de la voie multiplex intermédiaire 40, c'est-à-dire au rythme de la base de temps locale 510 tandis que, simultanément, la trame impaire suivante est écrite, et inversement. Chaque paire de mémoires 215ᵢ-216ᵢ ou 217ᵢ-218ᵢ mémorise, par conséquent, une trame pendant 2×125 µs = 250 µs. Les paires de mémoires 215ᵢ-216ᵢ, 217ᵢ-218ᵢ étant identiques, seules les mémoires 215 et 216ᵢ et le circuit de décision 28ᵢ, affectés aux trames paires, ont été représentés en détail sur la fig. 1.

La mémoire 215ᵢ est constituée de 32 registres à décalage à 8 bits 2150₀ à 2150₃₁ qui, sous la commande du circuit de reprise de verrouillage 214, en réponse à la détection d'un mot de verrouillage de trame paire, sont connectés en série avec l'entrée Eᵢ, dans l'ordre de l'indice h décroissant: 2150₃₁ à 2150₀. Pendant cette période de trame MIC, la mémoire 215 réalise ainsi un unique registre à décalage composé de 32x8 = 256 étages à 1 bit. A la fin d'une trame paire, chaque registre 2150ₕ a enregistré l'octet correspondant à la voie composante IT_{i,h} ettous les bits des octets de même rang r, compris entre 0 et 7, sont rangés sur une même colonne. A cet instant, un signal transmis sur un fil 5100 par la base de temps 510 commande simultanément, à travers 32 circuits de décision d'inversion des états des bits 280₀ à 280₃₁, le transfert des 8 bits parallèles des octets contenus dans les registres 2150₀ à 2150₃₁ dans les huit derniers étages des registres à décalage 2160₀ à 2160₃₁ qui constituent la seconde mémoire 216ᵢ. Le premier étage (à droite sur la fig. 1 ) de chaque registre à décalage 2160ₕ contient 1 bit additionnel qui est transmis par le circuit de décision d'inversion correspondant 280ₕ et dont l'état indique si les bits transférés ont eu leurs états inversés ou non, comme on le verra dans la suite. Egalement simultanément, les registres de la mémoire tampon 217ⱼ affectée aux trames impaires MIC sont mis en série pour enregistrer, pendant la trame impaire MIC suivante, les octets composants suivants, d'une manière analogue à la mémorisation précédente.

Pendant la mémorisation de ladite trame impaire suivante, les mots de 9 bits dans les registres 2160₀ à 2160₃₁ sont traités bit à bit. D'abord les bits additionnels, puis les bits de même rang des octets des voies composantes ITₒ,ₒ à IT_{0,31}, sont lus par 9 translations vers la droite des colonnes de la mémoire 216ᵢ. Les 2^{N} groupes des 32 bits de même rang r sont transférés en parallèle à partir des 2^{N} mémoires 216₀ à 216₂N₋₁ dans les cellules correspondantes 220_{i,h} de la mémoire 220 à travers des portes OU 219, et cela à la fréquence de 9 x 8 = 72 kHz transmise par la base de temps 510 sur un fil 5101. Cette fréquence de 72 kHz correspond à la fréquence des trames récurrentes Tₐ, Tₒ à T₇ de la voie multiplex intermédiaire 40. En effet, la fréquence de multitrame MI C égale à 8 kHz doit être conservée dans la voie multiplex intermédiaire 40.

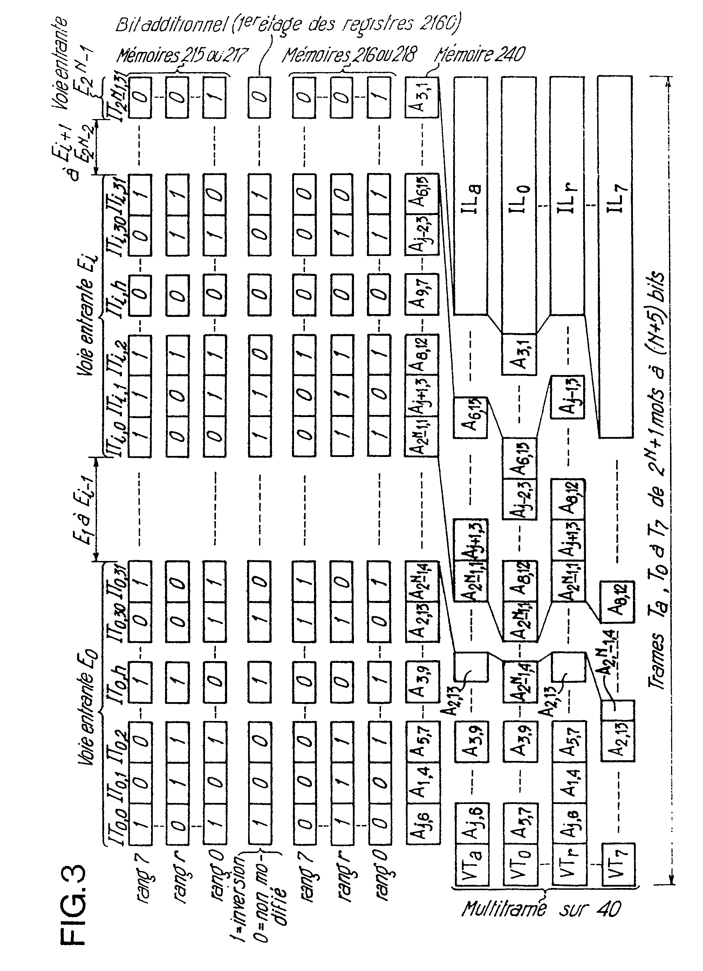

A titre d'exemple, on a représenté sur les trois premières lignes de la fig. 3 les bits de dernier rang 7, d'un rang intermédiaire 4 et de premier rang 0 des voies composantes ITₒ, IT₁, IT₂, ... ITₕ, ... IT₃₀, IT₃₁, dans chacune des voies multiplex entrantes Eₒ et Eᵢ qui sont mémorisées avant le transfert précédent dans les étages de rangs 7, r et 0 des registres à décalage respectifs 2150₀ à 2150₃₁ des mémoires 215₀ et 215ᵢ. On a supposé que les bits de rang 0 des voies composantes précitées Eₒ et Eᵢ sont respectivement égaux à 1,0, 1, ... 0, ... 1, 1 et 0, 1, 1, ... 0, ... 1, 0, que ceux de rang r sont égaux à 0, 1, 1, ... 1 , ... 0, 0 et 0, 0, 1, ... 0, ... 1, 1 et que ceux de rang 7 sont égaux à 1, 0, 0, ...1, ... 0,1 et 1,1,1, ... 0, ... 0, 1. D'autre part, on a supposé que, à cet instant de transfert, les liaisons des voies composantes IT_{i,h} entrantes précitées avec des voies composantes sortantes IT_{j,k} sont les suivantes:
- pour la voie multiplex entrante Eₒ: IT_{0,0}-IT_{j,6}, IT_{0,1}-IT_{1,4}, IT_{0,2}-IT_{5,7}, ... IT_{0,h}-IT_{3,9}, ... IT_{0,30}-IT_{2,13}, IT_{0,31}-IT₀N_{-1,4}, et
- pour la voie multiplex entrante Eᵢ: IT_{i,0}-IT₀N_{-1,1}, IT_{i,1}-IT_{j+1,3}, IT_{i,2}-IT_{8,12}, ... IT_{i,h}-IT_{9,7}, ... IT_{i,30}-IT_{j-2,3}, IT_{i,31}, IT_{6,15}.

Les adresses des voies composantes sortantes A_{j,k} correspondantes sont indiquées à la huitième ligne de la fig. 3. Ces adresses sont préalablement mémorisées dans les cellules 240₀,₀ à 240₀,₃₁ et 240_{i,0} à 240_{i,31} de la mémoire d'adresses 240, correspondant aux voies entrantes précitées, sous la commande de l'unité de commutation 520, et sont lues sélectivement et multiplexées à une fréquence de 2048 kHz, dès que les circuits d'autorisation de lecture 230₀,₀ à 230₀,₃₁ et 230_{i,0} à 230_{i,31} correspondants ont reconnu des bits à l'état 1, comme selon le brevet FR-A Nₒ 2430141.

Cependant, conformément à l'invention, les bits à l'état 1 autorisant les lectures des adresses de la mémoire 240 ne résultent pas directement de ceux transmis par les voies MIC entrantes Eₒ à E₂N₋₁. Afin que le nombre d'adresses transmises dans une multitrame de la voie multiplex intermédiaire 40 et correspondant aux bits des octets soit strictement inférieur à la moitié des bits reçus, chaque octet transféré d'un registre 2150 vers un registre 2160 a ses bits inversés s'il possède un nombre de bits à l'état 1 supérieur à 4, de sorte que, dans ce cas, les adresses effectivement transmises correspondent à des bits reçus à l'état 0, en nombre inférieur à 4. A la quatrième ligne de la fig. 3, on a indiqué l'état du bit additionnel transmis par le circuit de décision respectif 280 dans le premier étage du registre respectif 2160. Si on désigne par P le poids de 1 octet résultant de l'addition de ses 8 bits effectuée dans le circuit de décision respectif 280, le bit additionnel est à l'état 1 si P > 4, ce qui implique une inversion des bits de l'octet, et est à l'état 0 si P ≼ 4, ce qui implique que les bits de l'octet sont transférés sans modification, comme selon la demande de brevet précitée. En d'autres termes, il y a inversion des états des bits de l'octet s'il contient au moins 5 bits à l'état 1.

Selon la quatrième ligne de la fig. 3, les bits additionnels des voies composantes entrantes précitées sont supposés égaux à 1, 0, 0, ... 1, ... 1, 0, ... et 1, 1, 0, ... 0, ... 0, 1. Cela signifie, à l'instant considéré, que les octets des voies composantes entrantes telles que ITₒ,ₒ, IT_{0,h}, ITₒ,₃₀, IT_{i,0}, IT_{i,1} et IT_{i,31} contiennent au moins 5 bits à l'état 1 et que les octets des voies composantes entrantes telles que IT_{0,1}, IT_{0,2}, IT_{0,31}, IT_{i,2}, IT_{i,h} et IT_{i,30} contiennent au plus 4 bits à l'état 1. Les cinquième, sixième et septième lignes de la fig. 3 indiquent respectivement les états des bits de rang 7, r et 0 dans les 8 derniers étages des registres 2160, après transfert à travers les circuits de décision correspondants 280.

Puis, le traitement de la commutation bit à bit se poursuit dans les circuits d'autorisation de lecture 220 et la mémoire d'adresses 240 d'une manière analogue à celle décrite dans la demande de brevet précitée, à l'exception que, au lieu de traiter 8 bits informatifs pour chaque voie composante, la partie réception en traite 9, c'est-à-dire 8 bits plus le bit additionnel. La multitrame de la voie multiplex 40 contient alors 9 trames dont la première correspond aux bits additionnels, afin d'effectuer ou non l'inversion des bits informatifs dans les parties émissions des voies multiplex sortantes. Cette première trame est signalisée par un mot de verrouillage VTₐ qui est lu à partir de la mémoire morte des mots de verrouillage 250. Ainsi, comme montré à la neuvième ligne de la fig. ₃, chaque adresse A_{j,6}, ... A₃,₉, ... A_{2,13} et A₂N_{-1,1}, A_{j+1,3}, ... A_{6,15} correspondant à une liaison relative aux voies multiplex entrantes Eₒ et E_{;} dont les octets ont subi une inversion est lue dans la mémoire 240. Comme dans les autres trames, les transmissions de ces adresses sont contiguës et succèdent à celle du mot de verrouillage de trame VTₐ. Un intervalle de temps libre ILₐ est également disponible à la fin de la première trame pour des transmissions éventuelles de mots de signalisation ou analogues à partir de la mémoire vive 260, sous la commande de l'unité de commande de commutation 520.

A la suite de la lecture des adresses correspondant aux bits additionnels et incluses dans la première trame, la lecture des bits informatifs, inversés ou non selon le cas, s'effectue à la fréquence de 72 kHz, par décalage des octets dans les registres 2160. Chaque lecture des bits de même rang est précédée du mot de verrouillage de trame VTₒ à VT₇ caractérisant le bit de rang 0 à 7 et est suivie d'un intervalle de temps libre IL₁ à IL₇. Ces intervalles IL ont généralement des durées différentes. Les 8 trames suivantes sont ainsi formées, comme montré aux 3 dernières lignes de la fig. 3 pour les trames correspondant aux bits informatifs de rangs 0, r et 7. Chaque mot de verrouillage de trame est lu à partir de la mémoire morte 250 sous la commande de la base de temps 510 et chaque ensemble de mots de signalisation, si demandé, est lu à partir de la mémoire vive 260 sous la commande de l'unité 520. Les mots de verrouillage de trame, d'adresse et éventuellement de signalisation sont transmis, comme selon le brevet FR-A Nₒ 2430141, soit en parallèle sur un bus de 8 fils constituant la voie multiplex intermédiaire 40, soit en série à travers un convertisseur parallèle-série 270, comme illustré à la fig. 1. Lorsque la multitrame paire est ainsi constituée à partir du traitement des mots à 9 bits contenus dans toutes les mémoires 216₀ à 216₂N₋₁, la base de temps 510 ordonne le traitement des mots à 9 bits suivants contenus dans les autres mémoires 218₀ à 218₂N₋₁, afin de constituer la multitrame impaire suivante.

Etant donné que le nombre de bits à l'état 1 dans les 8 derniers étages des registres 2160 sont en nombre inférieur ou égal à 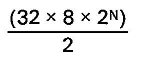 et, corollairement, le nombre d'adresses transmises dans les 8 dernières trames VT₀ à VT₇ est inférieur ou égal au nombre précédent, la somme des durées des intervalles libres IL₀ à IL₇ occupe un intervalle temporel disponible pour la transmission de mots de signalisation égal ou supérieur à 32x8x2N-1 mots d'adresse. On notera que cette somme des intervalles libres IL, selon le brevet FR-A Nₒ 2430141, peut être réduite à zéro dans le cas où les octets ont tous leurs bits à l'état 1, ce qui ne permet pas l'insertion de mots de signalisation. Par contre, selon l'invention, le débit binaire dans la voie intermédiaire 40 est sensiblement augmenté par le fait que la multitrame contient une trame additionnelle VTₐ. Ce débit est égal à 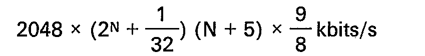 en supposant, comme selon la demande de brevet précitée, que chaque mot de verrouillage VTₐ, VT₀ à VT₇ et chaque mot d'adresse comprend (N+5) bits et que chaque mot d'adresse comprend une première partie à N bits identifiant la voie multiplex sortante Sⱼ et une seconde partie à 5 bits identifiant la voie composante IT_{j,0} à IT_{j,31} de la voie sortante Sⱼ.

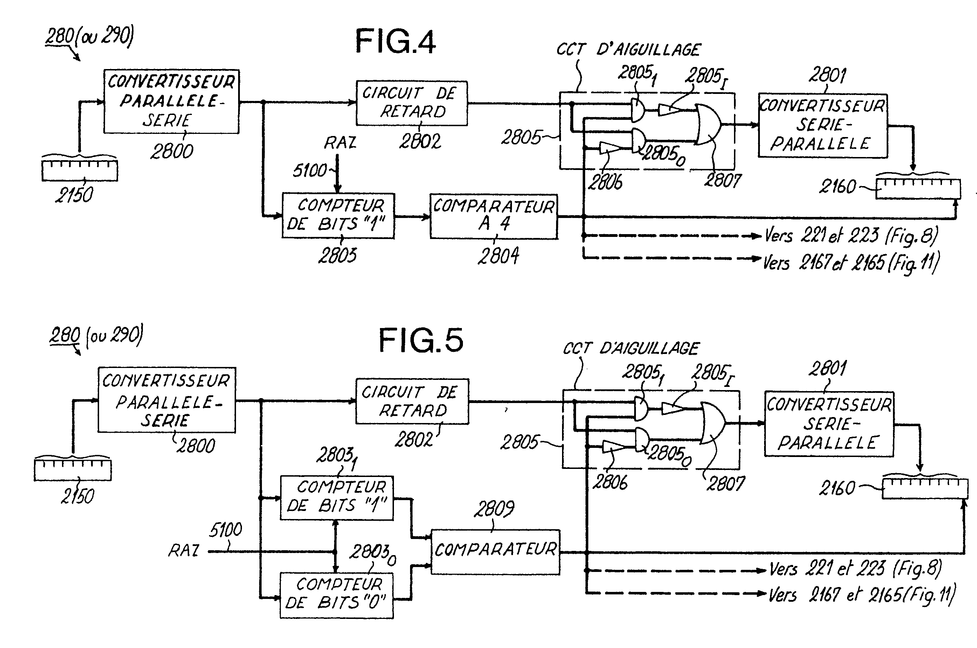

La fig. 4 illustre une première réalisation d'un circuit de décision 280 (ou 290) attribué à une voie composante entrante. Il comprend, à son entrée, un convertisseur parallèle-série 2800 qui reçoit les 8 bits parallèles du registre correspondant 2150 et, à sa sortie, un convertisseur série-parallèle 2801 qui délivre les 8 bits précédents, inversés ou non, aux 8 derniers étages du registre correspondant 2160. La sortie du convertisseur parallèle-série 2800 est reliée aux entrées d'un circuit de retard 2802 et d'un compteur 2803 qui compte les bits à l'état 1 de l'octet mémorisé dans le registre 2150. Après chaque lecture du contenu des registres 2150, les compteurs 2803 sont remis à zéro (RAZ) par la base de temps 510, à travers le bus 5100. Chaque remise à zéro déclenche l'émission du compte du compteur 2803 vers un comparateur à 4, 2804, qui transmet sur sa sortie le bit additionnel. Si le P désigne le compte du compteur 2803, le bit additionnel est un 1 si P > 4 et commande l'inversion des 8 bits informatifs à travers un circuit d'aiguillage 2805 qui est interconnecté entre le circuit de retard 2802 et le convertisseur série-parallèle 2801.

Le circuit de retard 2802 impose un retard égal à la durée de la décision d'inversion effectuée par les circuits 2803 et 2804. Le circuit d'aiguillage 2805 comprend 2 portes ET 2805₀ et 2805, dont les entrées numériques sont reliées à la sortie du circuit de retard 2802 et dont les entrées de commande sont reliées directement, et à travers un inverseur 2806, à la sortie du comparateur 2804. Lorsque P > 4, la porte ET 2805, est ouverte et transmet l'octet série vers un inverseur 2805₁, puis à une entrée de 1 porte OU 2807. Lorsque P < 4, la porte ET 2805₀ est ouverte et transmet directement l'octet série à l'autre entrée de la porte OU 2807. La sortie de la porte OU 2807 délivre à l'entrée du convertisseur série-parallèle 2801 les octets informatifs dont les états des bits sont inversés ou non en fonction du nombre P de bits à l'état 1 qu'ils contiennent. Le bit additionnel est transmis par la sortie du comparateur 2804 dans le premier étage du registre correspondant 2160.

Une autre réalisation d'un circuit de décision 280 (ou 290) est montrée à la fig. 5. Il comprend, comme précédemment, le convertisseur parallèle-série 2800, le circuit de retard 2802, le circuit d'aiguillage 2805 et le convertisseur série-parallèle 2801. L'autre voie attribuée aux moyens de décision est constituée par 2 compteurs 2803₀ et 2803₁, qui transmettent leurs comptes Pₒ et P₁ aux entrées d'un comparateur 2809. Le compteur 2803₀ compte les bits à l'état 0 et le compteur 2803, compte les bits à l'état 1. Le comparateur 2809 compare les comptes Pₒ et P₁ et transmet le bit additionnel vers l'entrée de commande de la porte ET 2805₁, l'inverseur 2806 et le premier étage du registre correspondant 2160. Le bit additionnel est à l'état 0 si Pₒ > P₁, c'est-à-dire si le nombre de bits à l'état 0 de l'octet est supérieur à celui des bits à l'état 1, ce qui implique la transmission directe de l'octet. Si P₀ ≼ P₁, le bit additionnel est à l'état 1 et il y a inversion des bits de l'octet.

De préférence, la seconde réalisation (fig. 5) est employée, car le seuil de décision est indépendant du nombre de bits contenus dans un mot informatif, ici un octet.

En se référant maintenant à la fig. 2, on rappellera certaines caractéristiques de l'organisation et du fonctionnement d'une partie réception, telle que 60ⱼ affectée à la voie sortante multiplex Sⱼ, déjà vues dans le brevet FR-A No 2430141, conjointement à celles propres à l'invention.

Côté de l'entrée, la voie multiplex intermédiaire 40 est reliée aux entrées d'une base de temps 610 et d'un convertisseur série-parallèle 620 lorsque la voie 40 est une voie multiplex unifilaire. La base de temps 610 comprend un circuit 6110 de récupération du rythme des bits transmis sur la voie 40. Le circuit 6110 est connecté à un circuit de reprise de verrouillage de la trame MIC sortante 6120 transmettant des signaux d'horloge aux fréquences des bits et des octets sortants à 2048 kHz et à 256 kHz. A la sortie du convertisseur 620, les mots d'adresse A_{j,k} et les mots de verrouillage de trame VTₐ, VT₀ à VT₇, notamment, sont transmis sur un bus de N+5 fils à 3 détecteurs 630, 640 et 641. Chacun des ces détecteurs comprend un circuit de comparaison de chaque mot à (N+5) bits transmis avec un ou plusieurs mots préalablement mémorisés.

Le détecteur 630 compare les mots reçus aux mots de verrouillage de trame VTₐ, VTₒ à VT₇ correspondant respectivement aux débuts des trames d'adresses qui ont été transmises à la suite de bits additionnels à l'état 1 et de bits informatifs inversés ou non à l'état 1, tels que mémorisés dans les registres 2160 (fig. 1). Le détecteur 630 transmet un signal d'horloge à la fréquence des trames reçues, égale à 72 kHz, vers un compteur de trames 6130. Après division respectivement par 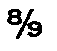 et par 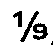 , le détecteur 630 délivre un signal d'horloge à la fréquence des voies composantes sortantes, égale à 64 kHz, vers le circuit de reprise de verrouillage 6120 et un signal d'horloge à la fréquence des trames MIC sortantes (ou des multitrames entrantes provenant de la voie multiplex intermédiaire 40) égale à 8 kHz, vers le circuit 6120 et vers des circuits d'écriture et de lecture des trames paires et impaires MIC 681, 682. Le signal d'horloge à 8 kHz permet de distinguer les multitrames paires et impaires en vue de leurs écritures et lectures en opposition. Le détecteur 630 fournit également sur un fil de sortie 635 un quatrième signal d'horloge à la fréquence de 8 kHz dont le créneau a une durée égale à 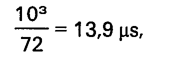 en réponse à ladite détection des mots de verrouillage additionnels VTₐ.

Les détecteurs 640 et 641 reconnaissent si un mot d'adresse A_{j,k} correspondant à l'émission de 1 bit à l'état 1 est destiné à une voie composante de la voie sortante Sⱼ. Le détecteur 640 compare la première partie à N bits de chaque mot d'adresse reçu A_{j,k} au mot d'adresse Aᵢ. Le détecteur 641 compare la seconde partie de 5 bits de chaque mot d'adresse reçu A_{j,k} aux 32 mots d'adresse des voies composantes IT_{j,0} à IT_{j,31} de la voie sortante Sⱼ. Si l'adresse Aⱼ est détectée par le détecteur 640, un circuit de commande d'écriture 651 des bits à l'état 1 inscrit de tels bits de même rang r dans les cellules parmi 32 d'une mémoire 660 correspondant aux adresses des voies composantes IT_{j,k} détectées par le détecteur 641. Cette écriture dans la mémoire 660 est réalisée en parallèle pendant une durée inférieure à celle d'une trame de la voie intermédiaire 40 qui est égale à 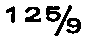 = 13,9 µs. Les autres cellules de la mémoire 660, dont le contenu est remis à zéro périodiquement au début de chacune des 9 trames par un circuit de remise à zéro 652 relié au compteur 6130, restent à l'état 0. POur un même rang, les bits à l'état 0 contenus dans la mémoire 660 correspondent à ceux à l'état 0 du même rang qui ont été mémorisés dans les registres 2160 qui sont assignés aux voies composantes IT_{i,h} des voies multiplex entrantes Eₒ à E₂N₋₁ en liaison avec les voies composantes IT_{j,k} de la voie sortante Sⱼ, c'est-à-dire celles qui n'ont pas engendré une transmission d'adresses sur la voie multiplex intermédiaire 40.

Les bits de même rang r sont ensuite transmis en parallèle sur les 32 sorties de la mémoire 660 vers un circuit de décision d'inversion des bits 69, propre à la présente invention. Une réalisation préférée de ce circuit 69 est illustrée à la fig. 6.

Il comprend 2 jeux de 32 portes ET 690₀ à 690₃₁ et 691₀ à 69131 dont les entrées numériques sont reliées respectivement aux sorties de la mémoire 660. Les portes ET 691₀ à 691₃₁ sont commandées directement par le quatrième signal d'horloge précité délivré par le fil de sortie 635 du détecteur 630, afin qu'elles ne délivrent que les bits additionnels vers des détecteurs de bits additionnels 692₀ à 692₃₁. Par contre, les portes ET 690₀ à 690₃₁ sont commandées à travers un inverseur 693 par le quatrième signal d'horloge précité du détecteur 630, afin qu'elles ne soient transparentes qu'aux 8 bits des octets informatifs. Le circuit de décision 69 comprend également 32 circuits d'aiguillage 695₀ à 695₃₁ et 1 mémoire tampon à 32 cellules 698. Chacun des circuits d'aiguillage 695 est identique à celui 2805 décrit en référence à la fig. 4. Il comprend 2 portes ET 6950 et 6951, 2 inverseurs 695, et 696 et 1 porte OU 697, identiques respectivement aux éléments 2805₀, 2805₁, 2805ₗ, 2806 et 2807 du circuit 2805. La sortie de chaque détecteur de bits additionnels 692₀ à 692₃₁, tel qu'une bascule bistable, est reliée, dans le circuit d'aiguillage associé 695₀ à 695₃₁, directement et à travers l'inverseur 696, aux entrées de commande des portes ET 6951 et 6950 dont les entrées numériques sont reliées à la sortie de la porte ET correspondante 690₀ à 690₃₁.

Ainsi, sous la commande des détecteurs 692, les circuits d'aiguillage 695 effectuent les opérations inverses de celles effectuées dans les circuits d'aiguillage 2805, afin de restituer les bits effectivement transmis par les voies composantes entrantes IT_{i,h}. Cela revient, pour un même rang r, r variant de 0 à 7, à la transformation de l'une des cinquième et sixième lignes de la fig. 3 en l'une des première et troisième lignes de ladite fig. 3.

La mémoire tampon 698, dont les 32 cellules sont reliées aux sorties des portes OU 697 des circuits d'aiguillage 695₀ à 695₃₁, est destinée à modifier le débit binaire, c'est-à-dire des mots d'adresse reçus, en débit binaire de la voie sortante Sⱼ. Elle est commandée par les signaux d'horloge du détecteur 630, en écriture, à la fréquence de 72 kHz et, en lecture, à la fréquence de 64 kHz.

La reconstitution des trames paires et impaires de la voie MIC sortante Sⱼ est ensuite analogue à celle décrite dans la demande de brevet précitée. A cette fin, 2 mémoires 670 et 671 sont respectivement associées aux multitrames paires et impaires de la voie intermédiaire 40 ou aux trames paires et impaires de la voie MIC sortante Sⱼ. Elles combinent les bits de même rang en des octets parallèles à l'inverse des combinaisons réalisées par des mémoires telles que 215ᵢ-216ᵢ et 217ᵢ-218ᵢ de la fig. 1 . 8 groupes successifs de 32 bits parallèles lus successivement dans la mémoire tampon 698 sont écrits dans la mémoire de trame paire 670, tandis que les 32 octets qui correspondent aux 8 groupes successifs de 32 bits parallèles qui ont été transmis préalablement sont lus dans la mémoire de trame impaire 671, et inversement. Le circuit 681 transmet les ordres d'écriture des trames paires et de lecture des trames impaires et le circuit 682 transmet les ordres de lecture et d'écriture des trames paires et impaires aux mémoires 670 et 671, à partir de la fréquence de trame de 8 kHz. Les groupes de 32 bits parallèles sont écrits à la fréquence de 256 kHz dans les 32 registres à décalage de la mémoire 670 ou 671, chaque registre mémorisant, après une période de multitrame de 125 µs, l'octet complet d'une voie IT_{i,k}. Puis, pendant la période de multitrame suivante, les octets ITⱼ,ₒ à IT_{j,31} mémorisés en parallèle sont lus en série selon cet ordre, par mise en série des 32 registres de la mémoire 670 ou 671 et transmis sur la voie sortante Sⱼ.

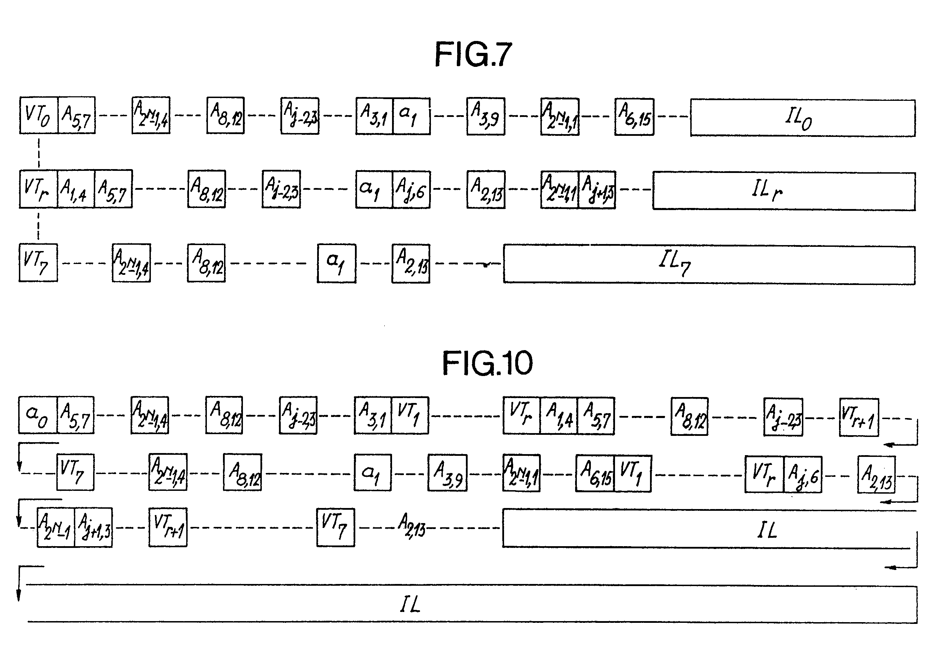

On se réfère maintenant à la fig. 7 pour décrire une seconde configuration de la multitrame de la voie multiplex intermédiaire 40. Dans chacune des 8 trames VT₀ à VT₇ de cette multitrame, les mots d'adresse qui sont associés à des octets non modifiés sont rangés immédiatement après le mot de verrouillage de trame, puis le dernier de ces mots d'adresse est suivi d'un mot a₁, dit d'inversion de bits, à la suite duquel les mots d'adresse qui sont associés à des octets ayant eu leurs bits inversés sont rangés.

La fig. 7 représente les trames d'adresses correspondant aux bits informatifs de rangs 0, r et 7, appartenant à des octets initiaux ayant les caractéristiques indiquées dans les quatre premières lignes de la fig. 3 et correspondant aux liaisons de voies composantes entrante et sortante IT_{i,h}-ITⱼ,ₖ mentionnées sur la fig. 3. Comparativement à la multitrame de la fig. 3, celle selon la fig. 7 ne contient plus une trame particulière VTₐ indiquant implicitement les inversions des états des bits d'octets. Cette indication implicite est détectée dans les parties réceptions 60ⱼ par le rangement des adresses correspondant à des octets non inversés immédiatement après les mots de verrouillage VTₒ à VT₇ et par le rangement des adresses correspondant à des octets inversés immédiatement après les mots a,. Par suite, le débit binaire sur la voie intermédiaire est diminué par rapport à celui selon la première configuration et est faiblement augmenté par rapport à celui selon la demande de brevet précitée, bien que le nombre de mots d'adresse transmis dans les trames VT₀ à VT₇ de la voie 40 soit toujours inférieur à 2^{N-1}×32×8. Le débit binaire est ainsi égal à 2048x (2^{N} + 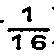 ) (N+5) kbits/s, en supposant que chaque mot a, comprend (N+5) bits.

Par exemple, pour la trame de rang r, relativement aux voies entrantes composantes ITₒ,ₒ, IT_{0,1}, IT_{0,2'} ... IT_{0,4}, ... IT_{0,30} et IT_{0,31} de la voie MIC entrante Eₒ, les adresses A_{1,4}, A₅,₇, ... sont transmises après le mot de verrouillage VT,, puisque les bits de rang r (fig. 3, sixième ligne) et les bits d'indication d'inversion (fig. 3, quatrième ligne) des voies composantes entrantes IT_{0,1}, IT_{0,2} sont respectivement égaux à 1 et à 0. L'état de ces premiers bits imposent la transmission d'une adresse de voie composante sortante et l'état de ces seconds bits 0 indique qu'il n'y a pas eu d'inversion des bits des octets. A l'inverse, les bits de rang r et les bits d'indication d'inversion des voies composantes entrantes ITₒ,ₒ et IT_{0,30} sont tous égaux à 1. L'état de ces derniers bits d'indication d'inversion impose que les adresses correspondantes Aⱼ,₆ et A_{2,13} doivent être transmises dans la zone dite des bits inversés, après le mot a₁ de la trame VT,.

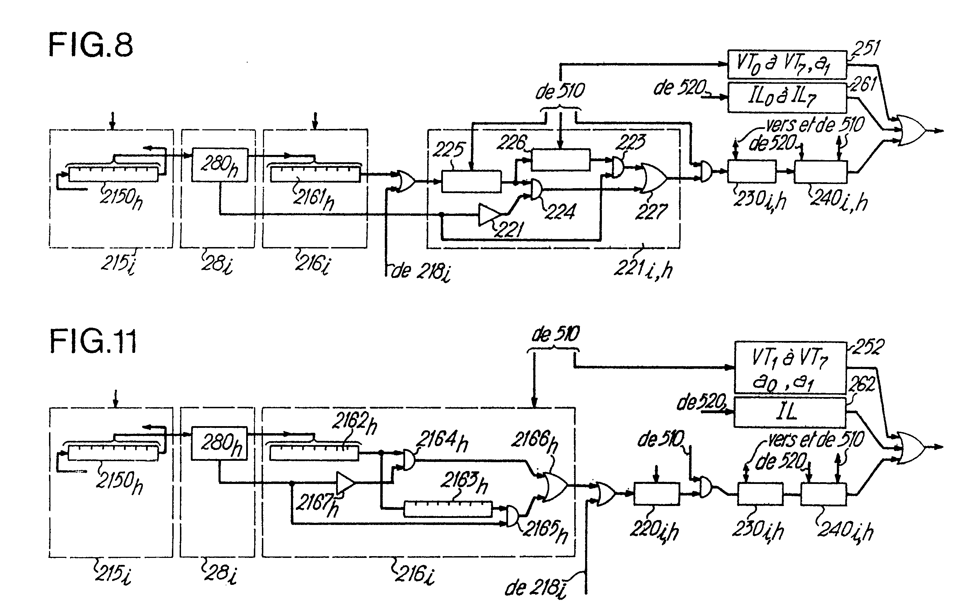

La fig. 8 représente schématiquement les modifications apportées à la partie réception de la fig. 1, relativement aux organes associés à une voie composante entrante IT_{i,h}. Les registres à décalage 2150₀ à 2150₃₁ de la mémoire 215ᵢ (ou 217ᵢ) et les circuits de décision d'inversion de bits 280₀ à 280₃₁ du circuit 28 (ou 29ᵢ) selon la fig. 4 ou 5, ne sont pas modifiés. Par contre, les registres à décalage 2161 ₀ à 2161₃₁ de la mémoire tampon 216, (ou 218ᵢ) ne comprennent plus que 8 étages, comme selon la demande de brevet précitée, afin de recevoir en parallèle les bits des octets inversés ou non transmis par les convertisseurs série-parallèle 2801 des circuits de décision 280. Le bit additionnel délivré par le comparateur 2804 (ou 2809) de chaque circuit, tel que 280ₕ montré à la fig. 8, est délivré directement et à travers un inverseur 221 aux entrées de commande de deux portes ET 223 et 224. Cet inverseur et ces deux portes sont inclus dans un circuit 221_{i,h} à deux mémoires de 1 bit, 225 et 226, qui remplace la mémoire à 1 bit, 220_{i,h}, de la fig. 1. Il a pour fonction de distinguer les bits des octets non inversés de ceux inversés. La première mémoire 225 reçoit à la fréquence de 64 kHz les bits du registre 2161 et, après ordre de lecture par la base de temps 510, les transmet à l'autre entrée de la porte ET 224 et à la seconde mémoire à 1 bit 226. La sortie de la mémoire 226 est reliée à l'autre entrée de la porte ET 223 dont la sortie, ainsi que celle de la porte ET 224, est reliée, à travers une porte OU 227, à l'entrée du circuit d'autorisation de lecture 230_{i,h}.

On voit que, lorsque le bit additionnel est à l'état 0, un bit informatif est transmis de la mémoire 225, à travers la porte ouverte ET 224, vers la cellule mémoire 240_{i,h}. Indépendamment du bit additionnel, le bit informatif est transféré dans la mémoire 226 après lecture de la mémoire 225.

Pour obtenir les trames de la fig. 7 pendant 15,6 µs, la base de temps 510 commande au début de cette période la lecture de toutes les mémoires 225, afin que la mémoire 240 explore toutes les cellules mémoires adressées par un bit 1, non inversé, et transmette sur la voie 40 des premières adresses correspondantes Aⱼ,ₖ entre le mot de verrouillage VTᵣ, correspondant au rang r des bits, et un mot a₁. Après réception d'un signal de fin d'exploration de la mémoire 240, la base de temps 510 commande la lecture des secondes mémoires 226 dont les contenus sont transmis vers les circuits d'autorisation de lecture 230 si les bits additionnels correspondant sont à l'état 1 (porte ET 223 ouverte). Les bits à l'état 1 précédemment lus autorisent la lecture d'adresses Aⱼ,ₖ de la mémoire 240 qui sont alors insérées à la suite du mot a₁ précité sur la voie intermédiaire multiplex 40.

Selon la configuration de la multitrame de la voie intermédiaire relative à la fig. 7, par comparaison aux mémoires 250 et 260 de la fig. 1, une mémoire morte 251 et une mémoire vive 261 de la partie réception de la fig. 8 contiennent respectivement des mots de verrouillage VT₀ à VT₇ et un mot d'indication d'inversion a₁, et des mots de signalisation à transmettre dans les espaces libres variables ILₒ à IL₇.

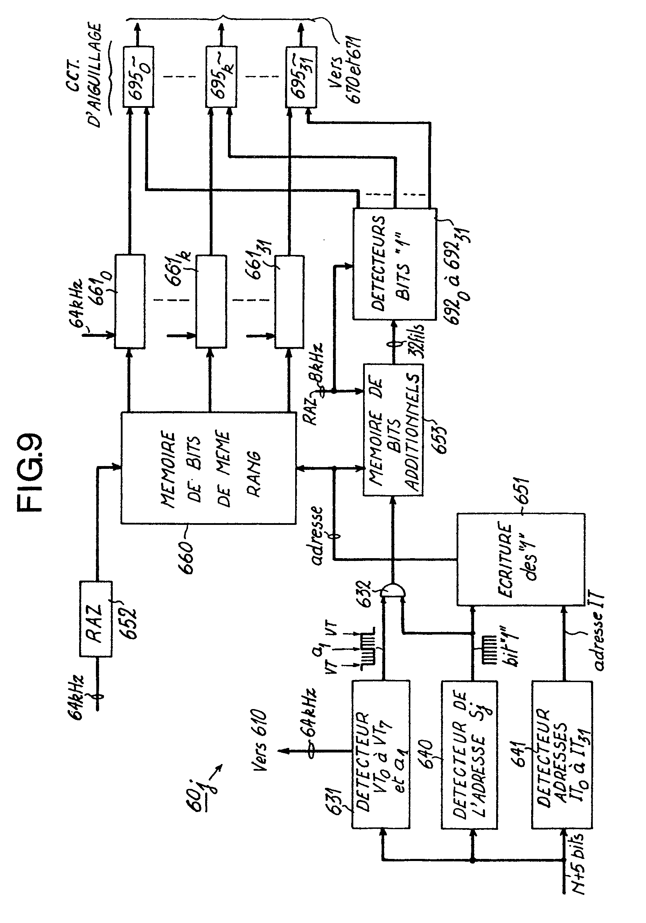

La fig. 9 représente partiellement la partie réception 60ⱼ relative à la transmission de multitrames selon la fig. 7. Les circuits 610, 620, 681, 682, 670 et 671 ne sont pas représentés et sont analogues à ceux montrés à la fig. 2 de la demande de brevet précitée.

De même, les circuits 640, 641, 651, 660, 692₀ à 692₃₁ et 695₀ à 695₃₁ sont analogues à ceux montrés sur les fig. 2 et 6. Les principales modifications sont un détecteur 631 à la place du détecteur 630 (fig. 2), qui compare les mots transmis aux 8 mots de verrouillage VT₀ à VT₇ et au mot a₁ et qui transmet la fréquence de trame à 64 kHz, l'insertion d'une mémoire de bits additionnels à 32 cellules 653, dont les sorties parallèles sont reliées aux entrées des détecteurs de bits additionnels 692₀ à 692₃₁, et l'interconnexion en parallèle de registres à décalage 661 ₒ à 66131 entre les sorties de la mémoire de bits de même rang 660 et les entrées numériques communes des portes ET 6950 et 6951 des circuits d'aiguillage 695₀ à 695₃₁ montrés en détail à la fig. 6.

Le détecteur 631 produit un signal qui commande une porte ET 632 et qui est à la fréquence de 64 kHz. Les créneaux de ce signal de commande sont au niveau 0 entre la détection d'un mode de verrouillage VT et la détection suivante d'un mot a₁ et au niveau 1, après la détection du mot a₁. L'autre entrée de la porte ET 632 est reliée à la sortie du détecteur 640 de l'adresse de la voie multiplex sortante Sⱼ (première partie des adresses A_{j,k}). La sortie de la porte 632 transmet à la mémoire 653 une suite de premiers créneaux au niveau 0 pour des mots d'adresse détectés immédiatement après un mot de verrouillage VT₀ à VT₇ et des seconds créneaux au niveau 1 pour des mots d'adresse détectés immédiatement après un mot a₁. Les premier et second créneaux correspondent à des bits additionnels indiquant le transfert d'un octet initial sans inversion et avec inversion. A la fin d'une multitrame, la mémoire 653 contient l'état des bits additionnels tels que transmis par les comparateurs des circuits de décision 280 de la fig. 8. En effet, à chaque fois qu'un bit 1 est écrit dans la mémoire de bits de même rang 660, un bit additionnel correspondant est écrit dans la mémoire 653 à une même adresse transmise par le circuit d'écriture 651.

On notera que, pour la variante de multitrame de la fig. 7, la détection des octets ayanttous leurs bits à l'état 0 ou 1 est interdite, puisqu'ils ne peuvent être distingués à la réception, aucune adresse n'étant transmise aussi bien après un mot VT qu'après un mot a₁. Dans ce cas, lorsque 1 octet 1 1 1 1 1 1 1 1 esttransmis par une voie composante MIC entrante E, un circuit particulier (non représenté) inclus dans chaque circuit de décision d'inversion de bits 280 commande l'introduction de l'adresse de la voie composante sortante correspondante IT_{j,k}, par exemple dans la première comprise entre VT et a₁ des 8 trames de la voie intermédiaire. Cela revient à neutraliser, pour ce cas particulier, la procédure d'inversion des bits. Par contre, un mot entrant nul d'une voie MIC E ne donne lieu à aucune transmission d'adresses A_{j,k}.

Puisqu'il est nécessaire de recevoir complètement une multitrame pour détecter les bits d'inversion de la mémoire 653, les bits de même rang sont retardés dans des registres à décalage 661 ₒ à 661₃₁ à 8 bits. A la fin de chaque multitrame, le contenu de la mémoire 653 est transféré vers les détecteurs 692₀ à 692₃₁, afin de procéder aux inversions éventuelles dans les circuits d'aiguillage 695₀ à 695₃₁, relativement aux octets des registres 661 ₒ à 661₃₁, comme pour la procédure décrite en référence à la fig. 6. Les bits de même rang sont ensuite transmis en parallèle vers les mémoires de multitrame paires et impaires 670, 671, comme selon la demande de brevet précitée.

La fig. 10 représente une troisième configuration d'une multitrame d'adresses convoyées par la voie multiplex intermédiaire 40. Sa structure est proche de celle de la fig. 7, à la différence près que les mots d'adresse correspondant à tous les octets initiaux non inversés sont rassemblés au début de la multitrame, après un mot aₒ indiquant la non- inversion, et que, à la suite de ce premier groupe d'adresses, un mot a₁ indiquant l'inversion est suivi des mots d'adresse correspondant à tous les octets initiaux inversés. En supposant que les octets initiaux des voies entrantes composantes ITₒ,ₒ, IT_{0,1}, IT_{0,2}, ... IT_{0,h}, ... IT_{0,30}, IT_{0,31} sont ceux indiqués aux quatre premières lignes de la fig. 3, en correspondance avec les adresses des voies composantes sortantes de la huitième ligne de la fig. 3, la multitrame selon cette troisième réalisation est composée:
- à la suite du mot aₒ, d'un groupe de mots d'adresse A_{5,7}, ... correspondant aux bits de rang 0 n'ayant pas subi d'inversion, et de 7 autres groupes de mots d'adresse tels que VT,, A_{1,4}, A_{5,7}, ... correspondant respectivement aux bits de rangs 1 à 7 n'ayant pas subi d'inversion, puis
- à la suite du mot a₁, d'un groupe de mots d'adresse ... A_{3,9}, ... correspondant aux bits de rang 0 ayant été inversés, et de 7 autres groupes de mots d'adresse tels que VT,, ... A_{j,6}, ... correspondant respectivement aux bits de rangs 1 à 7 ayant été inversés, et enfin
- d'un espace libre IL permettant la transmission de mots supplémentaires propres à la signalisation, comme déjà dit.

On remarquera que ce tassement des mots d'adresse au début de la multitrame peut être également envisagé pour les multitrames conformes à la fig. 7 de la demande de brevet précitée et aux fig. 3 et 7 de la présente invention, afin que les espaces libres tels que ILₐ, ILₒ à IL₇ soient rassemblés en un espace commun IL à la fin de la multitrame. Dans le cas de la présente invention, étant donné que le nombre d'adresses transmises est toujours strictement inférieur à un nombre prédéterminé, égal à (2^{N}×32)+(2^{N-1}×32)×8 pour la multitrame de la fig. 3, et à (2N-1 x32) x8 pour les multitrames des fig. 7 et 1 0, on voit que la multitrame peut contenir un espace libre variable IL, correspondant à un nombre de mots à (N+5) bits transmis sur la voie multiplex 40, qui est le complément au nombre d'adresses transmises par rapport au nombre prédéterminé indiqué ci-dessus. En d'autres termes, la configuration de multitrame à tassement d'adresses permet de diminuer sensiblement de moitié le débit indiqué pour une multitrame à trames périodiques. Relativement aux fig. 3, 7 et 10, le débit binaire pour une multitrame à tassement d'adresses d'une durée de 125 µs est donné par le tableau suivant:

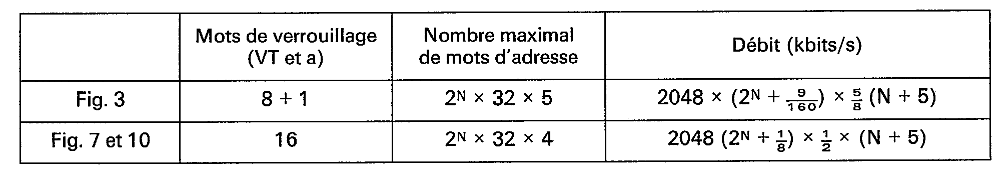

Pour les indications ci-dessus, on a supposé, comme déjà dit, qu'aussi bien les mots d'adresse (à première partie à N bits et à seconde partie à 5 bits) que les mots de verrouillage VT₀ à VT₇ et les mots aₒ et a₇ comprennent chacun (N+5) bits.

On décrit ci-après les modifications à apporter aux circuits de réception (fig. 1) et d'émission (fig. 2) pour un réseau de commutation à multitrame selon la fig. 10.

Comme pour la fig. 8, on a représenté à la fig. 11 la chaîne des circuits de la partie émission associée à une voie entrante composante IT_{i,h}. A l'exception de la structure de la mémoire 216ᵢ (ou 218), tous les autres circuits 2150ₕ, 280ₕ, 220_{i,h}, 230;,ₕ et 240_{i,h} sont analogues à ceux de la fig. 1. Chaque registre 2160ₕ de la fig. 1 est remplacé par un circuit à 2 registres à décalage 2162ₕ et 2163ₕ à 8 étages chacun. Le premier 2162ₕ reçoit en parallèle les octets transmis par le convertisseur série-parallèle 2801 du circuit de décision 280ₕ (fig. 4 ou 5) et transmet leurs bits en série à une porte ET 2164ₕ et à l'entrée du premier étage du second registre 2163ₕ. La sortie du registre 2163ₕ est également reliée à une entrée d'une porte ET 2165ₕ dont la sortie, ainsi que celle de la porte 2164ₕ, sont reliées aux entrées d'une porte OU 2166ₕ transmettant les bits en série vers la mémoire à 1 bit correspondante 220, ₕ. Les autres entrées des portes ET 2164ₕ et 2165ₕ sont reliées à travers un inverseur 2167ₕ et directement à la sortie du comparateur 2804 ou 2809 du circuit de décision 280ₕ (fig.4 ou 5). On voit que le circuit à 2 registres 2162ₕ et 2163ₕ est analogue à celui à 2 mémoires à 1 bit 225 et 226 décrit en référence à la fig. 8. Son fonctionnement est également analogue, à la différence près que les registres ne sont pas commandés en lecture pour chaque trame, mais pour chaque multitrame de la voie multiplex intermédiaire 40.

Ainsi, au début de chaque multitrame de la fig. 10, après lecture de aₒ dans une mémoire 252, qui fait office de mot de verrouillage de rang 0, toutes les adresses correspondant à des 1 initiaux (non inversés) sont lues dans la mémoire 240. Pour ce faire, après enregistrement rapide des octets dans les registres tels que 2162ₕ, la base de temps 510 ordonne la lecture bit à bit de ces octets. Ils sont transférés dans les seconds registres, tels que 2163h, et sélectivement traversent la porte ET 2164h, si le bit additionnel reçu à l'entrée de l'inverseur 2167ₕ est un 0 (non inversion). Cette lecture de bit est effectuée à au moins une fréquence supérieure à 2 x 64 kHz. Après transmission des 8 premiers groupes de mots, tels que aₒ, A_{5,7}, ... VTi,... VT,, A_{1,4}, ... VT₇, ... A₂N_{-1,4}, ... selon la fig. 10, par lecture dans une mémoire 252, équivalente aux mémoires 250 (fig. 1) ou 251 (fig. 8), et dans la mémoire 240 et transmission de ces mots sur la voie intermédiaire 40, la base de temps 510 initialise la lecture des octets mémorisés dans les seconds registres 2163ₕ, en réponse à un signal de fin d'exploration des cellules de la mémoire 240. Tous les octets contenus dans les registres 2163ₕ qui correspondent à un bit additionnel à l'état 1 sont lus bit à bit par ouverture de la porte ET 2165h. Ainsi, les 8 groupes suivants de mots, tels que a₁, ... A₃,₉, ... VT₁, ... VTᵣ, A_{j,6}, ... A_{2,13}, ... VT₇, ... A_{2,13}, ... de la fig. 10 sont transmis par les mémoires 252 et 240 à la suite des 8 groupes précités. Puis, l'intervalle de temps libre IL est éventuellement occupé par des mots de signalisation, sur ordre de l'unité de commande de commutation 520 (fig. 1) pour la lecture d'une mémoire vive 262.

Une partie réception 60ⱼ concernant la configuration de la multitrame de la fig. 10 est sensiblement analogue à celle montrée à la fig. 9. Les modifications à y apporter sont les suivantes:

Le détecteur 631 détecte les mots aₒ, a, et VT₀ à VT₇ et produit, à la place du signal d'horloge à 64 kHz, un premier signal de multitrame à 8 kHz en réponse à la détection d'un mot aₒ, transmis vers la base de temps 610 et vers la mémoire de bits additionnels 653, un second signal transmis vers le circuit de remise à zéro 652 dont les impulsions commandent la remise à zéro de la mémoire de bits de même rang 660, en réponse à la détection des mots aₒ, VT₁, ... VT₇, a₁, VT₁, ... VT₇, et un troisième signal transmis vers la porte ET 632 dont les créneaux à la fréquence des mots reçus sur la ligne 40 sont au niveau bas 0 pour l'intervalle compris entre aₒ et a₁, correspondant aux 8 premiers groupes d'adresses, et sont au niveau haut 1 pour l'intervalle suivant le mot a₁, correspondant aux 8 groupes d'adresses résultant d'octets inversés. Ce troisième signal commande également des portes ET (non représentées) transmettant les bits de même rang de la mémoire 660 vers les registres à décalage 661 ₒ à 661₃₁. Ces portes sont par ailleurs adressées par le circuit 651. Ainsi, des premières portes sont ouvertes par les créneaux au niveau bas du troisième signal du détecteur 631, afin de mémoriser, dans les premiers étages des registres 661 ₒ à 661₃₁, les octets non inversés. Puis, en complément à 32 du nombre de premières portes, des secondes portes sont ouvertes pour enregistrer les octets inversés.

On notera que, selon la fig. 9, relativement aux multitrames selon les fig. 7 et 10, les registres 661 ₀ à 661₃₁ sont en fait chacun composé par deux registres à décalage à 8 étages et à transfert rapide des contenus des premiers vers les seconds à la fréquence de multitrame de 8 kHz, et que, également, chaque détecteur de bits 1 est composé de deux bascules bistables. Cela permet d'enregistrer une multitrame pendant que la précédente est traitée dans les circuits d'aiguillage 695₀ à 695₃₁. En outre, cela contribue également, relativement à la fig. 10, à une écriture rang par rang des bits non périodiques contrairement à la lecture à la fréquence de 64 kHz.

Bien que l'invention ait été décrite d'après des réalisations préférées et en référence à des mots, tels que des octets, et à des voies multiplex entrantes et sortantes à 32 voies composantes, il est bien entendu que d'autres réalisations, facilement concevables par l'homme de métier, sont possibles et entrent dans le domaine de l'invention tel qu'il est défini par les revendications annexées. En particulier, le principe de la détection des états des bits et de leur inversion sélective peut être appliqué à la première variante selon le brevet FR-A N° 2430141. Dans ce dernier cas, les bits de chaque voie entrante simple sont regroupés en des groupes d'un nombre prédéterminé de bits et chaque multitrame de la voie multiplex intermédiaire comporte des mots de verrouillage relatifs au rang des bits dans lesdits groupes.

Par ailleurs, la présente description s'est rapportée à des voies multiplex d'entrée et de sortie à même débit. Cependant, un réseau de commutation commutant des voies multiplex de débits différents, mais sous-multiples entiers d'un même débit, peut être réalisé selon l'invention.

Enfin, on remarquera également que le principe de commutation bit à bit est inchangé lorsque les liaisons autres que point à point (1 à 1), telles qu'envisagées dans la description précédente, sont réalisées. Par exemple, à chaque voie entrante simple ou à chaque voie composante d'une voie multiplex entrante peuvent correspondre plusieurs voies sortantes au nombre de Q, afin de réaliser des liaisons multipoints 1 à Q.

## Revendications

1. Réseau de commutation numérique à division du temps pour commuter bit à bit une pluralité de voies numériques isochrones entrantes et sortantes convoyant des mots ayant un nombre prédéterminé de bits et ayant des débits différents mais sous-multiples d'un débit prédéterminé, le réseau comprenant:
- des moyens (213, 214, 215, 217) pour mettre en phase les voies entrantes (Eᵢ; IT_{i,h});
- des moyens (216, 218) pour mémoriser les bits ayant un même rang dans les mots des voies entrantes en phase;
- des moyens (220) pour détecter les bits mémorisés de même rang qui ont un état binaire prédéterminé;
- des moyens (240) pour mémoriser les mots d'adresse (Aⱼ; Aⱼ,ₖ) desdites voies numériques sortantes (Sⱼ; IT_{j,k}) qui sont à commuter avec les voies entrantes (Eᵢ; IT_{i,h});
- des moyens (230) commandés par les moyens (220) de détection des bits audit état binaire prédéterminé pour lire des mots d'adresse mémorisés de voies sortantes correspondant aux voies entrantes dont les bits sont audit état prédéterminé et ont un même rang;
- des moyens (240, 270) pour multiplexer les mots d'adresse lus en une voie numérique intermédiaire (40) à débit élevé présentant une multitrame récurrente composée d'un nombre de trames égal au nombre de bits d'un mot;
- des moyens (640) reliés à la voie numérique intermédiaire (40) pour détecter les mots d'adresse de chaque voie sortante (Sⱼ; IT_{j,k}), et
- des moyens (651, 660) commandés par lesdits moyens de détection de mots d'adresse (640) pour émettre un bit respectivement audit état binaire prédéterminé et à l'autre état binaire, dans ledit rang d'un mot de ladite voie sortante (Sⱼ; IT_{j,k}) en réponse à une détection ou à une absence de détection dudit mot d'adresse (Aⱼ; A_{j,k}) de ladite voie sortante, caractérisé en ce qu'il comprend:
- des moyens (2803, 2804-2809) reliés aux moyens de mise en phase (215,217) pour sommer les bits de chaque mot de chaque voie entrante (Eᵢ; IT_{i,h}), afin de produire un bit dit additionnel qui est audit autre état binaire lorsque ladite somme est respectivement inférieure ou égale ou strictement inférieure à la moitié dudit nombre prédéterminé de bits d'un mot qui est respectivement pair et impair, ou un bit dit additionnel qui est à l'état binaire prédéterminé dans le cas contraire;
- des premiers moyens d'aiguillage (2805) commandés par lesdits moyens de sommation pour transmettre directement, ou après inversion de leurs états, les bits dudit mot desdits moyens de mise en phase (215, 217) vers lesdits moyens de mémorisation des bits de même rang (216,218) en réponse audit bit additionnel à l'autre état binaire, ou audit état binaire prédéterminé;
- des moyens (250) pour transmettre dans chaque multitrame de la voie numérique multiplex intermédiaire (40) des mots (neuvième ligne, fig. 3; aₒ, a₁) indiquant l'inversion ou non des états des bits de chaque mot de voie entrante;
- des moyens (630, 640, 692) reliés à la voie intermédiaire (40) pour détecter lesdits mots d'indication d'inversion des mots de la voie entrante (Eᵢ; IT_{i,k}) correspondant à chaque voie sortante (Sⱼ; IT_{j,k}), afin de restituer lesdits bits additionnels, et
- des seconds moyens d'aiguillage (695) commandés par lesdits moyens de détection des mots d'indication d'inversion pour transmettre directement, ou après inversion de leurs états, les bits de chaque mot délivrés par les moyens d'émission (660) vers ladite voie sortante (Sⱼ; IT_{j,k}) en réponse à l'état binaire du bit additionnel correspondant audit mot.

2. Réseau de commutation numérique à division du temps conforme à la revendication 1, caractérisé en ce qu'il comprend des moyens (250) pour produire dans chaque multiₜrame (fig. 3) un nombre de mots de verrouillage de trame (VT,) égal audit nombre prédéterminé de bits dans lesdits mots de voies entrantes (Eᵢ; IT_{i,h}), chaque mot de verrouillage de trame étant multiplexé dans ladite voie numérique intermédiaire (40) pour définir une trame de mots d'adresse (Aⱼ; Aⱼ,ₖ) de voies sortantes (Sⱼ; IT_{j,k}) correspondant à la détection des bits de voies entrantes ayant un même rang et ayant ledit état binaire prédéterminé après passage à travers lesdits premiers moyens d'aiguillage, des moyens (premier étage 2160) pour insérer dans lesdits moyens de mémorisation des bits de même rang (216, 218) ledit bit additionnel de chaque mot, afin de le transmettre auxdits moyens de détection des bits de même rang qui ont un état prédéterminé, préalablement aux bits dudit mot, lesdits moyens de transmission des mots d'indication d'inversion (250) transmettant dans chaque multitrame un mot de verrouillage de trame additionnelle (VTₐ) définissant une trame de mots d'adresse (Aⱼ; Aⱼ,ₖ) correspondant à la détection des bits additionnels des mots de voies entrantes avant ledit état binaire prédéterminé, et des moyens de détection des mots d'indication d'inversion (692) délivrant auxdits seconds moyens d'aiguillage des bits additionnels respectivement audit état binaire prédéterminé et à l'autre état binaire, en réponse respectivement à la détection et à l'absence de détection de l'adresse de la voie sortante dans la trame additionnelle.

3. Réseau de commutation à division du temps conforme à la revendication 1, caractérisé en ce qu'il comprend des moyens (250) pour produire dans chaque multitrame (fig. 7) un nombre de mots de verrouillage de trame (VT,) égal audit nombre prédéterminé de bits dans lesdits mots de voies entrantes (Eᵢ; IT_{i,k}), chaque mot de verrouillage étant multiplexé dans ladite voie numérique intermédiaire (40) pour définir une trame de mots d'adresse (Aⱼ; Aⱼ,ₖ) de voies sortantes (Sⱼ; ITⱼ,ₖ) correspondant à la détection des bits de voies entrantes ayant un même rang et ayant ledit état binaire prédéterminé après passage à travers lesdits premiers moyens d'aiguillage, et des moyens (225, 226, fig. 8) pour commander lesdits moyens de lecture (230), d'abord en réponse aux bits additionnels des mots de voies entrantes ayant ledit état binaire prédéterminé, puis à ceux ayant ledit autre état binaire afin que, dans une trame correspondant à des bits de rang donné, un premier groupe de mots d'adresse correspondant aux bits de voies entrantes appartenant à des mots pour lesquels les bits additionnels ont un premier état binaire soit transmis sur la voie intermédiaire (40) après le mot de verrouillage de la trame (VT,) et avant la transmission d'un mot d'indication d'inversion (aᵢ) précédant un second groupe de mots d'adresse correspondant aux bits de voies entrantes audit rang appartenant à des mots pour lesquels les bits additionnels ont un second état binaire, lesdits moyens de détection des mots d'indication d'inversion (632, 653, 692, fig. 9) délivrant auxdits seconds moyens d'aiguillage (695) des bits additionnels respectivement audit premier et au second état binaire, en réponse à la détection du mot d'adresse de la voie sortante (Sⱼ; IT_{j,k}) respectivement dans un premier et dans un second groupe d'au moins l'une desdites trames de rangs différents et des moyens (661 ) étant prévus pour retarder, d'une durée égale à la somme des trames, chaque mot délivré par les moyens d'émission (660) vers les seconds moyens d'aiguillage (695).

4. Réseau de commutation à division du temps conforme à la revendication 1, caractérisé en ce qu'il comprend des moyens (250) pour produire dans chaque multitrame (fig. 10) un nombre de mots de verrouillage égal audit nombre de bits dans les mots de voies entrantes (Eᵢ; IT_{¡},ₕ) moins l'unité et des premiers et des seconds mots d'indication d'inversion (aₒ, a₁) correspondant à des bits additionnels respectivement à un premier et à un second état binaire, chaque multitrame de la voie intermédiaire (40) comprenant des première et seconde parties de mots d'adresse successives qui comprennent chacune respectivement ledit premier et le second mot d'indication d'inversion suivi par ledit nombre prédéterminé de groupes de mots d'adresse correspondant chacun à des bits de même rang ayant ledit état binaire prédéterminé après passage à travers les premiers moyens d'aiguillage, et appartenant à des mots pour lesquels le bit additionnel est respectivement à un premier et à un second état binaire, chaque groupe d'une partie étant précédé d'un mot de verrouillage de trame correspondant à un rang, à l'exception du premier groupe correspondant au premier rang qui est précédé respectivement par ledit premier et par le second mot d'indication d'inversion, et des moyens (2162, 2163, fig. 11) pour transmettre auxdits moyens de détection des bits audit état binaire prédéterminé (220), d'abord en réponse aux bits additionnels des mots de voies entrantes ayant le premier état binaire, la première partie de la multitrame sur la voie intermédiaire, puis en réponse aux bits additionnels des mots de voies entrantes ayant le second état binaire, à la suite de la première partie, la seconde partie de la multitrame, lesdits moyens de détection des mots d'indication d'inversion délivrant auxdits seconds moyens d'aiguillage (695) des bits additionnels respectivement audit premier et au second état binaire, en réponse à la détection du mot d'adresse de la voie sortante dans au moins l'un desdits groupes respectivement de la première et de la seconde partie de la multitrame et des moyens (661) étant prévus pour retarder, d'une durée de multitrame, chaque mot délivré par les moyens d'émission (660) vers les seconds moyens d'aiguillage (695).

5. Réseau de commutation à division du temps conforme à l'une des revendications 1 à 4, caractérisé en ce que les moyens de sommation des bits des mots de chaque voie entrante (Eᵢ; IT_{i,h}) comprennent des moyens (2803) pour compter les bits de chacun de ces mots qui sont audit état binaire prédéterminé et des moyens (2804) pour comparer la somme obtenue avec ledit nombre prédéterminé, afin de produire ledit bit additionnel.

6. Réseau de commutation à division du temps conforme à l'une des revendications 1 à 4, caractérisé en ce que les moyens de sommation des bits des mots de chaque voie entrante (Eᵢ; IT_{i,h}) comprennent des premiers moyens (2803₁) pour compter les bits de chacun de ces mots audit état binaire prédéterminé, des seconds moyens (2703₀) pour compter les bits de chacun de ces mots à l'autre état binaire et des moyens (2809) pour comparer les deux sommes obtenues, afin de produire ledit bit additionnel.

7. Réseau de commutation à division du temps conforme à l'une des revendications 1 à 6, caractérisé en ce que chaque voie respectivement entrante et sortante est une voie composante respectivement entrante (IT_{i,h}) et sortante (IT_{j,k}), incluse dans une voie multiplex respectivement entrante (Eᵢ) et sortante (Sⱼ), à N voies composantes, chaque voie composante entrante pouvant être commutée avec une voie composante sortante.

## Patentansprüche

1. Digitales Bit-für-Bit-Zeitmultiplex-Durchschaltnetzwerk zum bitweisen Durchschalten mehrerer isochroner digitaler Eingangs- und Ausgangsleitungen für Wörter mit einer vorbestimmten Bitzahl und unterschiedlichen Bitraten, die Teiler einer vorbestimmten Bitrate sind, wobei das Durchschaltnetzwerk umfasst:
- Mittel (213, 214, 215, 217) zur Herstellung der Gleichphasigkeit der Eingangsleitungen (Eᵢ; ITᵢ,ₕ); Mittel (216, 218) zum Speichern gleichrangiger Bits aus den Wörtern der gleichphasigen Eingangsleitungen,
- Mittel (220) zum Ermitteln derjenigen gespeicherten gleichrangigen Bits, die einen vorbestimmten Binärzustand haben,
- Mittel (240) zum Speichern der Adressenwörter (Aⱼ; A_{j,k}) der digitalen Ausgangsleitungen (Sⱼ; IT_{j,k}), welche auf die Eingangsleitungen (Eᵢ; IT_{i,h}) durchgeschaltet werden sollen,
- von den Mitteln (220) zur Ermittlung desvorbestimmten Binärzustands gesteuerte Mittel (230) zum Lesen der gespeicherten Adressenwörter der Ausgangsleitungen, die denjenigen Eingangsleitungen entsprechen, deren Bits den vorbestimmten Binärzustand und gleichen Rang haben,
- Mittel (240, 270) zum Multiplexen der gelesenen Adressenwörter in eine digitale Zwischenleitung (40) mit erhöhter Bitrate, die einen sich wiederholenden, aus mehreren Signalzügen zusammengesetzen Mehrfachsignalzug führt, wobei die Anzahl der Signalzüge gleich der Bitzahl eines Wortes ist,
- mit der digitalen Zwischenleitung (40) verbundene Mittel (640) zur Ermittlung der Adressenwörter jeder Ausgangsleitung (Sⱼ; IT_{j,k}) sowie
- von den Mitteln (640) zur Ermittlung der Adressenwörter gesteuerte Mittel (651, 660) zur Abgabe eines Bits des vorbestimmten bzw. anderen Binärzustandes in dem Rang eines Wortes der Ausgangsleitung (Sⱼ; IT_{j,k}) in Abhängigkeit von der Ermittlung oder dem Fehlen der Ermittlung des Adressenwortes (Aⱼ; Aⱼ,ₖ) der Ausgangsleitung, gekennzeichnet durch:
- mit den Mitteln (215, 217) zur Herstellung der Phasengleichheit verbundene Mittel (2803, 2804-2809) zum Summieren der Bits jedes Wortes jeder Eingangsleitung (Eᵢ; IT_{I},ₕ), um ein zusätzliches Bit vom anderen Binärzustand zu erzeugen, wenn die Summe kleiner oder gleich bzw. streng kleiner als die Hälfte der vorbestimmten Bitzahl eines geradzahligen bzw. ungeradzahligen Wortes ist, oder um ein zusätzliches Bit vom vorbestimmten Binärzustand im gegenteiligen Fall zu erzeugen,
- erste, von dem Summiermitteln gesteuerte Verzweigungsmittel (2805), um direkt oder nach Umkehrung ihrer Binärzustände die Bits des Wortes der Mittel zur Herstellung der Phasengleichheit (215,217) an die Mittel zum Speichern der gleichrangigen Bits (216,218) in Abhängigkeit vom Zusatzbit vom anderen Binärzustand oder dem vorbestimmten Binärzustand zu übertragen,
- Mittel (250) zur Übertragung, in jedem Mehrfach-Signalzug der binären Multiplex-Zwischenleitung (40), von Wörtern (9. Leitung, Fig. 3; aₒ, a₁), die eine Umkehrung oder nicht erfolgte Umkehrung der Binärzustände der Bits jedes Wortes der Eingangsleitung anzeigen,
- mit der Zwischenleitung (40) verbundene Mittel (630, 640, 692) zur Ermittlung der Wörter, die die Umkehrung der Wörter der Eingangsleitung (Eᵢ; IT_{i,h}) entsprechend jeder Ausgangsleitung (Sⱼ; IT_{j,k}) anzeigen, um die Zusatzbits wiederherzustellen, sowie zweite, von den Mitteln zur Ermittlung der Umkehrungsanzeigewörter gesteuerte Verzweigungsmittel (695), um direkt oder nach Umkehrung ihrer Binärzustände die Bits jedes Wortes, die von den Abgabemitteln (660) abgegeben sind, an die Ausgangsleitung (Sⱼ; IT_{j,k}) in Abhängigkeit vom Binärzustand des dem Wort entsprechenden Zusatzbits zu übertragen.

2. Digitales Zeitmultiplex-Durchschaltnetzwerk nach Anspruch 1, gekennzeichnet durch Mittel (250) zur Erzeugung, in jedem Mehrfach- Signalzug (Fig. 3), einer Anzahl von Signalzug-Verriegelungswörtern (VT,), die gleich der vorbestimmten Anzahl der Bits in den Wörtern der Eingangsleitungen (Eᵢ; IT_{i,h}) ist, wobei jedes Signalzug-Verriegelungswort in der digitalen Zwischenleitung (40) gemultiplext wird, um einen Zug von Adressenwörtern (Aⱼ; Aⱼ,ₖ) der Ausgangsleitungen (Sⱼ; ITⱼ,ₖ) entsprechend der Ermittlung derjenigen Bits der Eingangsleitungen zu definieren, die gleichen Rang und von vorbestimmtem Binärzustand nach Durchlauf durch die ersten Verzweigungsmittel haben; durch Mittel (erste Stufe 2160) zum Einfügen des Zusatzbits jedes Wortes in die Mittel zum Speichern der gleichrangigen Bits (216, 218), um es in Mittel zur Ermittlung der gleichrangigen Bits von vorbestimmtem Binärzustand vor den Bits des Wortes zu übertragen, wobei die Übertragungsmittel der Umkehr-Anzeigewörter (250) in jedem Mehrfachsignalzug ein zusätzliches Signalzug-Verriegelungswort (VTₐ) übertragen, welches einen Zug der Adressenwörter (Aⱼ; A_{j,k}) der Ausgangsleitungen (Sⱼ; IT_{j,k}) entsprechend der Ermittlung der Zusatzbits der Eingangsleitungen mit dem vorbestimmten Binärzustand definiert, sowie durch Mittel zur Ermittlung der Umkehr-Anzeigewörter (692), welche an die zweiten Verzweigungsmittel Zusatzbits des vorbestimmten Binärzustands bzw. des anderen Binärzustands in Abhängigkeit von der Ermittlung bzw. der nicht erfolgten Ermittlung der Adresse der Ausgangsleitung in dem zusätzlichen Signalzug abgibt.

3. Digitales Zeitmultiplex-Durchschaltnetzwerk nach Anspruch 1, gekennzeichnet durch Mittel (250) zur Erzeugung, in jedem Mehrfach- Signalzug (Fig. 7), einer Anzahl von Signalzug-Verriegelungswörtern (VT,), die gleich der vorbestimmten Anzahl der Bits in den Wörtern der Eingangsleitungen (Eᵢ; IT_{i,h}) ist, wobei jedes Verriegelungswort in der digitalen Zwischenleitung (40) gemultiplext ist, um einen Zug von Adressenwörtern (Aⱼ; A_{j,k}) der Ausgangsleitungen (Sⱼ; IT_{j,k}) entsprechend der Ermittlung der gleichrangigen Bits der Eingangsleitungen mit dem vorbestimmten Binärzustand nach Durchlauf durch die ersten Verzweigungsmittel zu definieren; durch Mittel (225, 226, Fig. 8) zum Steuern der Mittel zum Lesen (230) zuerst in Abhängigkeit der Zusatzbits der Wörter der Eingangsleitungen von dem vorbestimmten Binärzustand, dann in Abhängigkeit von den Bits mit dem anderen Binärzustand, damit in einem den Bits mit gegebenen Rang entsprechenden Signalzug eine erste Gruppe von Adressenwörtern, welche den Bits der Eingangsleitungen entsprechen, welche bei Wörtern auftreten, deren Zusatzbits einen ersten Binärzustand aufweisen, auf die Zwischenleitung (40) nach dem Signalzug-Verriegelungswort (VTᵣ) und vor der Übertragung eines Umkehr-Anzeigewortes (a₁), welches einer zweiten Gruppe von Adressenwörtern vorangeht, die den Bits der Eingangsleitungen dieses Rangs entsprechen, die in den Wörter auftreten, deren Zusatzbits einen zweiten Binärzustand haben, übertragen werden, wobei die Mittel zur Ermittlung der Umkehr-Anzeigewörter (632, 653, 692, Fig. 9) Zusatzbits des ersten bzw. zweiten Binärzustands in Abhängigkeit von der Ermittlung des Adressenworts der Ausgangsleitung (Sⱼ; ITⱼ,ₖ) in einer ersten bzw. zweiten Gruppe von mindestens einer der Signalzüge unterschiedlicher Ränge an die zweiten Verzweigungsmittel (695) abgeben, sowie durch Mittel (661) zur Verzögerung jedes Wortes um eine der Summe der Signalzüge gleiche Zeitspanne, welches von den Mitteln zur Abgabe (660) an die zweiten Verzweigungsmittel (695) abgegeben worden ist.

4. Digitales Zeitmultiplex-Durchschaltnetzwerk nach Anspruch 1, gekennzeichnet durch Mittel (250) zur Erzeugung, in jedem Mehrfach- Signalzug (Fig. 10), einer Anzahl von Verriegelungswörtern, die gleich der Bitzahl der Wörter der Eingangsleitungen (Eᵢ; ITⱼ,ₕ) vermindert um eins ist, und von ersten und zweiten Umkehr-Anzeigewörtern (aₒ, al), die den zusätzlichen Bits in einem ersten bzw. zweiten Binärzustand entsprechen, wobei jeder Mehrfach-Signalzug der Zwischenleitung (40) erste und zweite Teile von aufeinanderfolgenden Adressenwörtern umfasst, von denen jedes das erste bzw. zweite Umkehr-Anzeigewort gefolgt von der vorbestimmten Anzahl von Adressenwortgruppen, jede entsprechend den gleichrangigen Bits von dem Binärzustand nach Durchlauf durch die ersten Verzweigungsmittel aus den Wörtern, für die das Zusatzbit in einem ersten bzw. zweiten Binärzustand sich befindet, aufweist, wobei jeder Gruppe eines Teils ein Signalzug-Verriegelungswort entsprechend einem Rang vorhergeht, der bis auf die erste Gruppe dem ersten Rang entspricht, welchem das erste bzw. das zweite Umkehranzeigewort vorhergeht, sowie durch Mittel (2162, 2163, Fig. 11), um, zunächst in Abhängigkeit von den Zusatzbits der Wörter der Eingangsleitungen mit dem ersten Binärzustand, den ersten Teil des Mehrfach-Signalzugs auf der Zwischenleitung, dann in Abhängigkeit von den Zusatzbits der Wörter der Eingangsleitungen vom zweiten Binärzustand, nach dem ersten Teil den zweiten Teil des Mehrfach-Signalzugs an die Mittel zur Feststellung der Bits mit vorbestimmtem Zustand (220) zu übertragen, wobei die Mittel zur Feststellung der Umkehr-Anzeigewörter an die zweiten Verzweigungsmittel (695) Zusatzbits vom ersten bzw. zweiten Binärzustand in Abhän- gigkeiₜ von der Ermittlung eines Adressenworts der Ausgangsleitung in wenigstens einer der Gruppen des ersten bzw. des zweiten Teils des Mehrfachsignalzugs abgeben, sowie durch Mittel (661 ) zum Verzögern jedes von den Mitteln zur Abgabe (660) an die zweiten Verzweigungsmittel (695) abgegebenen Wortes um die Zeitspanne des Mehrfach-Signalzugs.

5. Digitales Zeitmultiplex-Durchschaltnetzwerk nach einem der Ansprüche 1 bis 4, dadurch gekennzeichnet, dass die Mittel zur Summation der Bits der Wörter jeder Eingangsleitung (Eᵢ; IT_{i,h}) Mittel (2803) zum Zählen der Bits jedes dieser Wörter, die den vorbestimmten ersten Binärzustand aufweisen, und Mittel (2804) zum Vergleichen der erhaltenen Summe mit der vorbestimmten Anzahl umfassen, um das Zusatzbit zu erzeugen.

6. Digitales Zeitmultiplex-Durchschaltnetzwerk nach einem der Ansprüche 1 bis 4, dadurch gekennzeichnet, dass die Mittel zur Summation der Bits der Wörter jeder Eingangsleitung (Eᵢ; IT_{i,h}) erste Zählmittel (2803₁) zum Zählen der Bits jedes dieser Wörter von vorbestimmtem Binärzustand sowie zweite Zählmittel (2703₀) zum Zählen der Bits jedes dieser Wörter vom anderen Binärzustand sowie Vergleichsmittel (2809) zum Vergleich der beiden erhaltenen Summen und zur Erzeugung des Zusatzbits enthalten.

7. Digitales Zeitmultiplex-Durchschaltnetzwerk nach einem der Ansprüche 1 bis 6, dadurch gekennzeichnet, dass jede Eingangs- bzw. Ausgangsleitung eine zusammengesetzte Eingangsleitung (IT_{i,h}) bzw. zusammengesetzte Ausgangsleitung (ITⱼ,ₖ) ist, die in einem Multiplex-Eingangskanal (E_{;}) bzw. Multiplex-Ausgangskanal (Sⱼ) mit N Leitungen enthalten ist, wobei jede zusammengesetzte Eingangsleitung mit jeder zusammengesetzten Ausgangsleitung durchgeschaltet werden kann.

## Claims

1. Time-division digital switching network for switching bit by bit a plurality of incoming and outgoing isochronous digital channels transmitting words having a predetermined number of bits and having rates which are different but sub- multiples of a predetermined low rate, the network comprising-
- means (213, 214, 215, 217) for phasing the incoming channels (Eᵢ; IT_{i,h});
- means (216, 218) for storing the bits having a same rank in the phased incoming channel words;
- means (220) for detecting stored same-rank bits which have a predetermined binary state;
- means (240) for storing address words (Aⱼ; A_{j k}) of said outgoing digital channels (Sⱼ; IT_{j,k}) to be switched to the incoming channels (E_{;}; IT_{i,h});
- means (230) controlled by the predetermined binary state bit-detecting means (220) for reading stored outgoing channel address words corresponding to incoming channels whose bits have said predetermined state and have a same-rank;
- means (240, 270) for multiplexing the read address words into a digital highway (40) at high rate having a recurrent multiframe made up of a frame number equal to the number of bits in a word;
- means (640) connected to the digital highway (40) for detecting the address words of each outgoing channel (Sⱼ; ITⱼ,ₖ); and
- means (651, 660) controlled by said address word-detecting means (640) for supplying a bit having said predetermined binary state, resp. the other binary state into said rank of a word of said outgoing channel (Sⱼ; IT_{j,k}) in response to said address word (Aⱼ; A_{j,k}) of said outgoing channel being detected or not detected, characterized in that it comprises:
- means (2803, 2804-2809) connected to the phasing means (215, 217) for adding the bits of each word of each incoming channel (E_{;}; IT_{i,h}) to produce a so-called additional bit which has said other binary state when said sum is not greater than or equal to, resp. strictly not greater than, half of said predetermined bit number in a word that is even, resp. odd, or a so-called additional bit which has the predetermined binary state in the opposite case;
- first switching means (2805) controlled by said adding means for transmitting directly, or through bit state inverting, the bits of said word from said phasing means (215, 217) to said same-rank bit-storing means (216, 218) in response to said additional bit in said other binary state, resp. said predetermined binary state;
- means (250) for transmitting in each multiframe of the multiplex digital highway (40) words (9th line, Fig. 3; aₒ, a₁) indicating that the bit states of each incoming channel word have been inverted or not;
- means (630, 640, 692) connected to the highway (40) for detecting said inversion-indicating words for said words in the incoming channel (Eᵢ; IT_{i,h}) corresponding to each outgoing channel (Sⱼ; ITⱼ,ₖ) to restore said additional bits; and
- second switching means (695) controlled by said inversion-indicating word-detecting means for transmitting directly, or through bit state inverting, the bits of each word supplied from said supplying means (660) into said outgoing channel (Sⱼ; IT_{j,k}) in response to the binary state of the additional bit corresponding to said word.

2. Time-division digital switching network according to Claim 1, characterized in that it comprises means (250) for producing in each multiframe (Fig. 3) a number of framing words (VTᵣ) equal to said predetermined number of bits in said incoming channel (Eᵢ; IT_{i,h}) words, each framing word being multiplexed in said digital highway (40) to define an outgoing channel (Sⱼ; ITⱼ,ₖ) address word (Aⱼ; A_{j,k}) frame corresponding to the detection of incoming channel bits having a same rank and having said predetermined binary state after being routed through said first switching means (first stage 2160) for inserting said additional bit of each word in said same-rank bit-storing means (216, 218) to transmit it to said means for detecting same-rank bits that have a predetermined state, before the bits of said word, said inversion-indicating word-transmitting means (250) transmitting in each multiframe an additional framing word (VTₐ) defining an additional frame of outgoing channel (Sⱼ; IT_{j,k}) address words (Aⱼ; Aⱼ,ₖ) corresponding to the detection of the incoming channel word additional bits having said predetermined binary state, and inversion-indicating word-detecting means (692) for supplying additional bits in said predetermined binary state, resp. in the other binary state, to said second switching means in response to the outgoing channel address in the additional frame being detected, resp. not detected.

3. Time-division switching network according to Claim 1, characterized in that it comprises means (250) for producing in each multiframe (Fig. 7) a number of framing words (VT,) equal to said predetermined number of bits in said incoming channel (E; IT_{j,k}) words each framing word being multiplexed in said digital highway (40) to definean outgoing channel (Sⱼ; ITⱼ,ₖ) address word (Aⱼ; A_{j,k}) frame corresponding to the detection of incoming channel bits having a same rank and having said predetermined binary state after being routed through said first switching means, and means (225, 226, Fig. 8) for controlling said reading means (230), firstly in response to the incoming channel word additional bits having said predetermined binary state, then in response to the incoming channel word additional bits having said other binary state such that, in a frame corresponding to bits having a given rank, a first group of address words corresponding to the incoming channel bits belonging to words for which the additional bits have a first binary state, being transmitted along the highway (40) after the framing word (VTᵣ) of the frame and before the transmission of an inversion-indicating word (a₁) preceding a second group of address words corresponding to the incoming channel bits having said rank and belonging to words for which the additional bits have a second binary state, said inversion-indicating word-detecting means (632, 653, 692, Fig. 9) supplying additional bits having said first, resp. second binary state to said second switching means (695) in response to the detection of the outgoing channel address word (Sⱼ; ITⱼ,ₖ) in a first, resp. second group of at least one of said frames having different ranks, and means (661) being provided to delay each word supplied from the supplying means (660) to the second switching means (695) by a time period equal to the sum of the frames.

4. Time-division switching network according to Claim 1, characterized in that it comprises means (250) for producing in each multiframe (Fig. 10) a number of framing words equal to said number of bits in the incoming channel (Eᵢ; IT_{i,h}) words minus one and first and second inversion-indicating words (aₒ, a₁) corresponding to additional bits having a first, resp. second binary state, each highway (40) multiframe including successive first and second address word parts each including said first, resp. second inversion-indicating word followed by said predetermined number of address word groups each corresponding to same-rank bits having said predetermined binary state after being routed through the first switching means, and belonging to words for which the additional bit is in the first, resp. second binary state, each group of a part being preceded by a framing word corresponding to a rank apart from the first group corresponding to the first rank that is preceded by said first, resp. second inversion-indicating word, and means (2162, 2163, Fig. 11) for transmitting to said predetermined binary state bit-detecting means (220) the first multiframe part along the digital highway in response firstly to the incoming channel word additional bits having the first binary state, then the second multiframe part following the first multiframe part in response to the incoming channel word additional bits having the second binary state, said inversion-indicating word-detecting means supplying additional bits having said first, resp. second binary state to said second switching means (695) in response to the detection of the outgoing channel address word in at least one of said groups of said first, resp. second multiframe part, and means (661) being provided to delay each word supplied from the supplying means (660) to the second switching means (695) by a multiframe duration.

5. Time-division switching network according to one of Claims 1 to 4, characterized in that the word bit-adding means for each incoming channel (Eᵢ; IT_{i,h}) comprise means (2803) for counting the bits of each of said words that are in said predetermined binary state and means (2804) for comparing the sum obtained with said predetermined number to produce said additional bit.

6. Time-division digital switching network according to one of Claims 1 to 4, characterized in that the word bit-adding means for each incoming channel (E_{;}; IT_{i,h}) comprise first means (2803₁) for counting the bits of each of said words having said predetermined binary state, second means (2703₀) for counting the bits of each of said words having the other binary state, and means (2809) for comparing the two sums obtained to produce said additional bit.

7. Time-division switching network according to one of Claims 1 to 6, characterized in that each incoming, resp. outgoing channel is an incoming (IT_{i,h}), resp. outgoing (IT_{j,k}) component channel included in an incoming (Eᵢ), resp. outgoing (Sⱼ) multiplex channel having N component channels, each incoming component channel capable of being switched to an outgoing component channel.
